# EUROPÄISCHE PATENTSCHRIFT

(11) **EP 3 523 838 B1**
(45) Veröffentlichungstag und Bekanntmachung des Hinweises auf die Patenterteilung: **15.09.2021**
(21) Anmeldenummer: 16782029.9
(22) Anmeldetag: 10.10.2016
(51) Int. Cl.: H01M 50/172, H01M 50/183, H01M 50/20, H01M 50/543

(54) **ELEKTRISCHE ENERGIESPEICHERVORRICHTUNG UND ELEKTROGERÄT**
ELECTRIC ENERGY STORAGE DEVICE AND ELECTRIC DEVICE
DISPOSITIF D'ACCUMULATION D'ÉNERGIE ÉLECTRIQUE ET APPAREIL ÉLECTRIQUE

(43) Veröffentlichungstag der Anmeldung: 14.08.2019
(73) Patentinhaber: Alfred Kärcher SE & Co. KG, 71364 Winnenden (DE)
(72) Erfinder: SPERL, Michael, 70188 Stuttgart (DE); KLÖPFER, Jürgen, 71576 Burgstetten (DE); HOFER, Thomas, 71549 Auenwald (DE)
(74) Vertreter: Hoeger, Stellrecht & Partner Patentanwälte mbB
(86) Internationale Anmeldenummer: PCT/EP2016/074233
(87) Internationale Veröffentlichungsnummer: WO 2018/068820

(56) Entgegenhaltungen:
- EP-A2- 0 821 444
- EP-A2- 1 833 137
- WO-A1-2008/138310
- WO-A1-2016/055133
- DE-A1- 10 214 367
- DE-A1-102010 041 278
- DE-A1-102013 202 022
- DE-A1-102014 214 070
- US-A1- 2007 224 492

## Beschreibung

Die vorliegende Erfindung betrifft eine elektrische Energiespeichervorrichtung für ein Elektrogerät, welche elektrische Energiespeichervorrichtung ein Gehäuse umfasst, welches Gehäuse einen Aufnahmeraum definiert, in welchem mindestens ein elektrischer Energiespeicher aufgenommen ist, welche elektrische Energiespeichervorrichtung mindestens zwei von einer Außenseite des Gehäuses zugängliche, elektrisch leitende Kontakte umfasst, die direkt oder indirekt mit dem mindestens einen elektrischen Energiespeicher elektrisch wirkverbunden sind, wobei das Gehäuse mindestens eine Kontaktöffnung aufweist und wobei die mindestens eine Kontaktöffnung von einem in sich geschlossenen Dichtelement umgeben ist.

Ferner wird nachfolgend ein Elektrogerät mit mindestens einem elektrischen Verbraucher, welcher mindestens teilweise, insbesondere vollständig, in einem Gerätegehäuse aufgenommen ist, welches Elektrogerät mindestens zwei von einer Außenseite des Gerätegehäuses zugängliche, elektrisch leitende Gerätekontakte umfasst, die direkt oder indirekt mit dem mindestens einen elektrischen Verbraucher elektrisch wirkverbunden sind.

Elektrische Energiespeichervorrichtungen und Elektrogeräte der eingangs beschriebenen Art kommen beispielsweise in Form von Gartengeräten zum Einsatz. Dabei kommen sowohl die elektrische Energiespeichervorrichtung als auch das Elektrogerät praktisch unvermeidlich mit Feuchtigkeit in Kontakt. Damit besteht jedoch auch die Gefahr, dass die mindestens zwei Kontakte der elektrischen Energiespeichervorrichtung und die mindestens zwei Gerätekontakte des Elektrogeräts mit der Feuchtigkeit in Kontakt kommen und korrodieren.

Insbesondere dann, wenn die mindestens zwei Kontakte der elektrischen Energiespeichervorrichtung und die mindestens zwei Gerätekontakte des Elektrogeräts elektrisch wirkverbunden sind und zum Betreiben des Elektrogeräts große Ströme über die Kontakte beziehungsweise die Gerätekontakte fließen, besteht eine besonders hohe Korrosionsanfälligkeit.

Aus der DE 10 2014 214 070 A1 ist eine Batteriezelle bekannt. Ein Energiespeichermodul und ein Elektrogerät sind in der DE 102 14 367 A1 beschrieben. Die DE 10 2010 041 278 A1 betrifft ein Batteriefach sowie ein Messgerät mit einem Batteriefach. In der WO 2016/055133 A1 sind eine Energiespeicheranordnung, ein Kraftfahrzeug umfassend eine solche Energiespeicheranordnung und Verfahren zu deren Herstellung offenbart. Aus der US 2007/0224492 A1 und der EP 1 833 137 A2 sind Adapter für eine Powertool-Batterie bekannt. Eine Steckkontakt-Paarung ist in der WO 2008/138310 A1 beschrieben. Die EP 0 821 444 A1 betrifft eine mehrpolige Steckvorrichtung, insbesondere für Elektro-Flurförderfahrzeuge, Batterien und Ladegeräte. In der DE 10 2013 202 022 A1 ist ein selbstadaptierender Kontakt für Hochstromsteckverbindungen offenbart.

Es ist daher eine Aufgabe der vorliegenden Erfindung, eine elektrische Energiespeichervorrichtung der eingangs beschriebenen Art so zu verbessern, dass ein sicherer Betrieb desselben auch unter Feuchtbedingungen möglich ist.

Diese Aufgabe wird bei einer elektrischen Energiespeichervorrichtung der eingangs beschriebenen Art erfindungsgemäß dadurch gelöst, dass die mindestens zwei Kontakte durch die mindestens eine Kontaktöffnung zugänglich sind.

Die besondere Anordnung des in sich geschlossenen Dichtelementes um die mindestens eine Kontaktöffnung des Gehäuses herum, ermöglicht es insbesondere, die elektrische Energiespeichervorrichtung relativ zum Gehäuse des Elektrogeräts abzudichten, wenn die elektrische Energiespeichervorrichtung und das Elektrogerät mechanisch und/oder elektrisch miteinander gekoppelt sind. So lassen sich die elektrischen Kontakte der elektrischen Energiespeichervorrichtung und die Gerätekontakte des Elektrogeräts gegenüber einer Umgebung in der Kopplungsstellung geschützt und abhängig vom Dichtelement auch fluiddicht anordnen. Feuchtigkeit kann so nicht mehr zu den mindestens zwei elektrischen Kontakten und zu den mindestens zwei Gerätekontakten gelangen. Auf diese Weise kann eine Korrosion, insbesondere beim Betrieb des Elektrogeräts, weitestgehend oder gar vollständig verhindert werden. Die mindestens zwei Kontakte können in einer einzigen Kontaktöffnung angeordnet sein. Alternativ kann auch für jeden Kontakt eine eigene Kontaktöffnung vorgesehen sein. Das in sich geschlossene Dichtelement kann alle Kontaktöffnungen gemeinsam umgebend angeordnet sein. Es kann aber auch für jede Kontaktöffnung ein einzelnes Dichtelement vorgesehen sein.

Günstig ist es, wenn das mindestens eine Dichtelement aus einem Dichtelementmaterial ausgebildet ist, wenn das Gehäuse mindestens teilweise, insbesondere vollständig, aus mindestens einem Gehäusematerial ausgebildet ist und wenn das Dichtelementmaterial weicher ist als das Gehäusematerial. Das Dichtelement aus dem im Vergleich zum Gehäusematerial weicheren Dichtelementmaterial auszubilden verbessert eine Dichteigenschaft des Dichtelements. Beispielsweise kann es an einem korrespondierenden Dichtelement des Elektrogeräts oder aber auch an einer Dichtkante desselben anliegen. Diese kann beispielsweise auch aus einem härteren Material als das Dichtelementmaterial ausgebildet sein. Das mindestens eine Dichtelement kann sich so optimal an eine Kontaktfläche des Elektrogeräts anschmiegen, wenn die elektrische Energiespeichervorrichtung und das Elektrogerät miteinander gekoppelt sind.

Eine besonders gute Abdichtung kann insbesondere erreicht werden, wenn eine Dicke des mindestens einen Dichtelements in einem Bereich von etwa 0,2 mm bis etwa 2 mm liegt. Insbesondere kann die Dicke in einem Bereich von etwa 0,4 mm bis etwa 0,8 mm liegen. Je dünner das Dichtelement ausgebildet ist, umso mehr Material lässt sich sparen. Je dicker das Dichtelement, umso größer ist seine Fähigkeit, Fertigungstoleranzen sowohl an der elektrischen Energiespeichervorrichtung als auch am Elektrogerät auszugleichen. Vorzugsweise liegt eine Breite des mindestens einen Dichtelements in einem Bereich von etwa 0,5 mm bis etwa 5 mm. Vorzugsweise liegt sie in einem Bereich von etwa 1,5 mm bis etwa 2,5 mm. Eine Breite des mindestens einen Dichtelements in den angegebenen Bereichen vorzusehen ermöglicht eine besonders gute Abdichtung der Energiespeichervorrichtung und des Elektrogeräts in der Kopplungsstellung.

Um eine Dichtwirkung des mindestens einen Dichtelements weiter zu verbessern, ist es günstig, wenn dieses aus einem elastischen Material ausgebildet ist oder ein elastisches Material enthält. Ein solches Dichtelement kann sich optimal an eine an ihm anliegende Kontur des Elektrogeräts anpassen.

Vorzugsweise ist das elastische Material ein Gummi ist. Beispielsweise kann es sich um Ethylen-Propylen-Dien-Kautschuk (EPDM), Nitrilkautschuk (NBR) oder Polyurethan (PUR), oder um anderes vernetzendes oder teilvernetzendes natürliches oder künstliches Material handeln.

Besonders einfach und kostengünstig ausbilden lässt sich die Energiespeichervorrichtung, wenn das elastische Material ein Kunststoff ist. Insbesondere kann der Kunststoff ein thermoplastischer Kunststoff sein. Das mindestens eine Dichtelement lässt sich so beispielsweise durch Spritzgießen auf das Gehäuse aufbringen.

Die Verarbeitung des Materials, aus dem das Dichtelement ausgebildet ist, lässt sich weiter verbessern, wenn der Kunststoff oder das Kunststoffgemisch ein thermoplastisches Elastomer ist oder mindestens ein thermoplastisches Elastomer enthält.

Besonders gute Dichteigenschaften lassen sich erreichen, wenn das thermoplastische Elastomer ein thermoplastisches Copolyamid, ein thermoplastisches Polyesterelastomer, ein thermoplastischer Copolyester, ein thermoplastisches Elastomer auf Olefinbasis, ein Styrol-Blockcopolymer, ein thermoplastisches Elastomer auf Urethanbasis oder ein vernetztes thermoplastisches Elastomer auf Olefinbasis ist.

Um insbesondere eine mechanische Kopplung zwischen der elektrischen Energiespeichervorrichtung und dem Elektrogerät zu verbessern, ist es günstig, wenn die mindestens eine Kontaktöffnung einen vieleckigen Querschnitt aufweist. Insbesondere kann die mindestens eine Kontaktöffnung einen drei-, fünf-, sechs- oder siebeneckigen Querschnitt aufweisen. Insbesondere ein dreieckiger Querschnitt weist große Vorteile auf, da die drei geneigten Innenflächen eine optimale Führung für einen korrespondierenden Kontaktvorsprung am Elektrogerät aufweisen. Um eine Verletzungsgefahr bei der Handhabung der Energiespeichervorrichtung zu verringern sowie eine Herstellung der Energiespeichervorrichtung zu verbessern, kann die im Querschnitt dreieckige Kontaktöffnung mit abgeschrägten Ecken ausgebildet sein. So ergibt sich insbesondere ein sechseckiger Querschnitt, der ausschließlich Innenwinkel aufweist, die größer als 90° sind. Dadurch lässt sich die Kontaktöffnung bei Bedarf auch auf einfache Weise reinigen. Der dreieckige Querschnitt kann insbesondere in Form eines gleichseitigen Dreiecks oder auch eines gleichschenkligen Dreiecks ausgebildet sein. Auf diese Weise lässt sich entweder eine beliebige Einführung eines korrespondierenden Kontaktvorsprungs des Elektrogeräts ermöglichen oder aber auch, bei einem gleichschenkligen Dreieck, eine eindeutig definierte Kopplung zwischen der Energiespeichervorrichtung und dem Elektrogerät.

Günstigerweise ist die mindestens eine Kontaktöffnung derart ausgebildet, dass sie genau eine oder genau drei Symmetrieebenen definiert. Wenn sie genau eine Symmetrieebene definiert, kann ein korrespondierender Kontaktvorsprung am Elektrogerät nur in genau einer Orientierung in die mindestens eine Kontaktöffnung eingeführt werden. Weist die mindestens eine Kontaktöffnung drei Symmetrieebenen auf, lässt sich ein Kontaktvorsprung in drei verschiedenen Orientierungen in die Kontaktöffnung einführen.

Vorzugsweise umfasst die elektrische Energiespeichervorrichtung zwei, drei, vier, fünf oder mehr Kontaktöffnungen. Insbesondere kann jeder Kontaktöffnung ein elektrischer Kontakt zugeordnet sein. So lassen sich die elektrischen Kontakte der Energiespeichervorrichtung auf einfache und sichere Weise gegeneinander elektrisch isolieren.

Ferner ist es günstig, wenn die mindestens zwei, drei, vier, fünf oder mehr Kontaktöffnungen identisch ausgebildet sind. Dies erleichtert zum einen eine Herstellung der elektrischen Energiespeichervorrichtung. Zum anderen kann so auch insbesondere eine mechanische Kopplung der Energiespeichervorrichtung mit dem Elektrogerät verbessert werden.

Für eine besonders gute Abdichtung ist es vorteilhaft, wenn jede der mindestens zwei, drei, vier, fünf oder mehr Kontaktöffnungen von einem Dichtelement umgeben ist. Jeder Kontaktöffnung ist also ein individuelles Dichtelement in diesem Fall zugeordnet. Damit kann erreicht werden, dass im Falle der Beschädigung eines Dichtelements Feuchtigkeit nur in die diesem Dichtelement zugeordnete Kontaktöffnung eindringen kann. Eine Abdichtung der anderen Kontaktöffnungen bleibt davon unberührt.

Gemäß einer weiteren bevorzugten Ausführungsform der Erfindung kann vorgesehen sein, dass die die zwei, drei, vier, fünf oder mehr Kontaktöffnungen umgebenden Dichtelemente miteinander verbunden, einstückig oder monolithisch ausgebildet sind. So kann eine zumindest teilweise redundante Abdichtung der mehreren Kontaktöffnungen erreicht werden. Zudem lässt sich so beispielsweise die Herstellung der Energiespeichervorrichtung vereinfachen, da die Dichtelemente in einem einzigen Arbeitsschritt beispielsweise durch Spritzgießen auf das Gehäuse aufgebracht werden können.

Um das Einführen der Gerätekontakte in die Kontaktöffnungen zu erleichtern, ist es vorteilhaft, wenn Längsachsen der zwei, drei, vier, fünf oder mehr Kontaktöffnungen parallel zueinander ausgerichtet sind. Insbesondere können sie senkrecht zu einem Gehäusewandabschnitt, in dem die Kontaktöffnungen ausgebildet sind, ausgerichtet sein.

Vorteilhaft ist es, wenn das mindestens eine Dichtelement flächenbündig mit einem Gehäusewandabschnitt, in dem die mindestens eine Kontaktöffnung ausgebildet ist, oder über diesen vorstehend ausgebildet ist. Eine flächenbündige Ausgestaltung ermöglicht es insbesondere, das Dichtelement möglichst unauffällig auszubilden und anzuordnen. Das über den Gehäusewandabschnitt vorstehende Dichtelement ermöglicht insbesondere einen optimalen Ausgleich von Fertigungstoleranzen sowohl an der Energiespeichervorrichtung als auch am Elektrogerät.

Auf besonders einfache Weise ausbilden lässt sich die Energiespeichervorrichtung, wenn das mindestens eine Dichtelement auf das Gehäuse aufgespritzt ist. Das Dichtelement muss dann nicht separat aufgelegt und montiert werden. Eine Befestigung ist zudem nicht erforderlich, da durch das Aufspritzen das mindestens eine Dichtelement direkt mit dem Gehäuse verbunden wird.

Ferner kann es günstig sein, wenn am Gehäuse ein die mindestens eine Kontaktöffnung umgebender Rücksprung ausgebildet ist und wenn das mindestens eine Dichtelement den Rücksprung mindestens teilweise, insbesondere vollständig, ausfüllend ausgebildet ist. Durch den Rücksprung kann das mindestens eine Dichtelement besonders sicher am Gehäuse angeordnet und befestigt werden. Insbesondere kann das mindestens eine Dichtelement auch aus dem Rücksprung vorstehend ausgebildet sein. Dadurch lässt sich insbesondere eine Dicke des mindestens einen Dichtelements vergrößern, wodurch Fertigungstoleranzen am Gehäuse oder am Gerätegehäuse noch besser ausgeglichen werden können.

Um eine Abdichtung der Energiespeichervorrichtung und des Elektrogeräts relativ zueinander weiter zu verbessern, ist es günstig, wenn das mindestens eine Dichtelement mindestens einen Teil einer die mindestens eine Kontaktöffnung begrenzenden Innenwandfläche bildet. Damit ist es möglich, beispielsweise auch den elektrischen Kontakt umgebend die mindestens eine Kontaktöffnung abzudichten. Insbesondere lässt sich so eine Abdichtung nicht nur auf einer von einer Außenseite des Gehäuses weg weisenden Außenfläche erreichen, sondern auf einer insbesondere quer, beispielsweise auch senkrecht, zur Außenfläche verlaufenden Innenwandfläche.

Vorteilhafterweise ist jedem elektrisch leitenden Kontakt eine Kontaktöffnung zugeordnet. Jeder elektrisch leitende Kontakt kann somit eine eigene Kontaktöffnung aufweisen. Eine Kontaktöffnung ist jedem elektrisch leitenden Kontakt auch dann zugeordnet, wenn alle Kontakte in einer einzigen Kontaktöffnung angeordnet oder ausgebildet sind.

Vorzugsweise entspricht die Anzahl der elektrisch leitenden Kontakte der Anzahl der Kontaktöffnungen. So lassen sich die Kontakte auf einfache Weise gegeneinander isolieren.

Eine besonders gute Abdichtung kann erreicht werden, wenn das mindestens eine Dichtelement in Form einer Formdichtung oder als O-Ring ausgebildet ist. Eine Formdichtung kann insbesondere eine äußere Kontur aufweisen, die an eine korrespondierende Dichtfläche des Elektrogeräts angepasst ist.

Um die elektrische Energiespeichervorrichtung mehrfach verwenden zu können, ist es vorteilhaft, wenn der mindestens eine elektrische Energiespeicher in Form einer wiederaufladbaren Batterie ausgebildet ist.

Vorzugsweise umfasst die elektrische Energiespeichervorrichtung eine Mehrzahl von elektrischen Energiespeichern. Diese können wahlweise in Serie oder parallel geschaltet werden. Auf diese Weise lassen sich insbesondere eine Betriebsspannung sowie eine Kapazität der elektrischen Energiespeichervorrichtung in gewünschter Weise vorgeben.

Vorteilhaft ist es, wenn die elektrische Energiespeichervorrichtung ausgebildet ist zum wahlweisen Koppeln mit einer Mehrzahl von insbesondere unterschiedlichen Elektrogeräten. Ein Anwender mit mehreren Elektrogeräten kann so die Energiespeichervorrichtung wahlweise zum Einsatz mit einem oder mehreren von diesen Elektrogeräten nutzen.

Günstigerweise ist die Energiespeichervorrichtung in Form eines Akkupacks ausgebildet. Dieser umfasst vorzugsweise mehrere Energiespeicher, die insbesondere über eine Steuereinrichtung der Energiespeichervorrichtung geladen und deren Ladezustand von dieser überwacht werden kann.

Gemäß einer weiteren bevorzugten Ausführungsform der Erfindung kann vorgesehen sein, dass mindestens einer der mindestens zwei elektrisch leitenden Kontakte eine oder zwei elektrisch leitende, federnd ausgebildete Kontaktzungen umfasst, welche in einer Grundstellung aneinander anliegen oder zwischen sich einen schmalen Spalt definieren. Insbesondere können alle Kontakte der Energiespeichervorrichtung in dieser Weise ausgebildet sein. Sie sind dann bestens geeignet, elektrisch leitende Gerätekontakte zwischen den Kontaktzungen aufzunehmen und so eine sichere elektrische Verbindung zwischen den Kontakten und den Gerätekontakten herzustellen.

Um das Einführen der Gerätekontakte zwischen die Kontaktzungen zu erleichtern, ist es günstig, wenn freie, vom Aufnahmeraum weg weisend ausgerichtete Enden der beiden Kontaktzungen voneinander weg weisend gekrümmt sind zur Ausbildung von Aufgleitflächen. Die Aufgleitflächen dienen insbesondere dazu, die Gerätekontakte zwischen die Kontaktzungen einzuführen.

Ferner wird bei einem Elektrogerät der eingangs beschriebenen Art vorgeschlagen, dass die mindestens zwei Gerätekontakte von mindestens einem Gerätekontaktvorsprung vorstehend ausgebildet sind und dass der mindestens eine Gerätekontaktvorsprung einen vieleckigen Querschnitt aufweist.

Insbesondere kann der mindestens eine Gerätekontaktvorsprung einen drei-, vier-, fünf-, sechs- oder siebeneckigen Querschnitt aufweisen. Durch die besondere Formgebung eines Querschnitts des mindestens einen Gerätekontaktvorsprungs kann dieser sicher und optimal abgedichtet in die insbesondere korrespondierend ausgebildete Kontaktöffnung an der Energiespeichervorrichtung eingeführt werden. Besonders sicher einführen lässt sich ein Gerätekontaktvorsprung, der einen dreieckigen Querschnitt aufweist. Insbesondere können die drei Ecken des dreieckigen Querschnitts abgeflacht sein, so dass sich insgesamt ein sechseckiger Querschnitt des mindestens einen Gerätekontaktvorsprungs ergibt. Die Seitenkanten der Querschnittsfläche können insbesondere unterschiedlich lang ausgebildet sein. Damit lassen sich die Zahl der Symmetrieachsen des Gerätekontaktvorsprungs in beliebiger Weise vorgeben und damit auch die Zahl möglicher Orientierungen bei der Verbindung zwischen dem Gerätekontaktvorsprung und der Kontaktöffnung der Energiespeichervorrichtung. Insbesondere können die mindestens zwei Gerätekontakte von einem einzigen gemeinsamen Gerätekontaktvorsprung vorstehend ausgebildet sein. Es kann aber auch für jeden der mindestens zwei Gerätekontakte ein jeweils separater Gerätekontaktvorsprung vorgesehen sein. Sind zwei oder mehr Gerätekontaktvorsprünge vorgesehen, dann können diese auch miteinander verbunden sein, insbesondere einstückig oder monolithisch ausgebildet sein. Die mindestens zwei Gerätekontakte können insbesondere feststehend an oder beweglich relativ zu dem mindestens einen Gerätekontaktvorsprung angeordnet oder ausgebildet sein.

Für eine optimale elektrisch leitende Verbindung zwischen den Gerätekontakten und den Kontakten der Energiespeichervorrichtung ist es günstig, wenn jeder der mindestens zwei Gerätekontakte in Form eines Kontaktstifts ausgebildet ist. Insbesondere können die Kontaktstifte flach und plättchenförmig ausgebildet sein.

Günstig ist es, wenn der mindestens eine Gerätekontaktvorsprung derart ausgebildet ist, dass er genau eine oder genau drei Symmetrieebenen definiert. Insbesondere kann bei nur einer einzigen Symmetrieebene der Gerätekontaktvorsprung nur in einer möglichen Orientierung in die Kontaktöffnung an der Energiespeichervorrichtung eingeführt werden. Weist der mindestens eine Gerätekontaktvorsprung drei Symmetrieebenen auf, kann er in mindestens drei verschiedenen Ausrichtungen in eine korrespondierend ausgebildete Kontaktöffnung eingeführt werden.

Günstig ist es, wenn das Elektrogerät mindestens zwei, insbesondere drei, vier, fünf oder mehr, Gerätekontaktvorsprünge mit jeweils einem Gerätekontakt aufweist. Beispielsweise können zwei Gerätekontakte auf jeweils einem Gerätekontaktvorsprung angeordnet sein, die mit einem Plus- und einem Minuspol der Energiespeichervorrichtung in der Kopplungsstellung elektrisch in Wirkverbindung stehen. Weitere Gerätekontakte und zugehörige Gerätekontaktvorsprünge können insbesondere zu Steuerungs- und Wartungszwecken genutzt werden.

Auf besonders einfache Weise ausbilden lässt sich das Elektrogerät, wenn die mindestens zwei Gerätekontaktvorsprünge und/oder Gerätekontakte identisch ausgebildet sind.

Um das Einführen des Gerätekontaktvorsprungs in eine Kontaktöffnung der Energiespeichervorrichtung zu erleichtern, ist es günstig, wenn sich ein Querschnitt des mindestens einen Gerätekontaktvorsprungs in Richtung auf ein freies Ende desselben hin verjüngt. Außenflächen des mindestens einen Gerätekontaktvorsprungs bilden so Aufgleitflächen für Innenwandflächen der korrespondierenden Kontaktöffnung.

Vorteilhaft ist es, wenn die mindestens zwei Gerätekontakte von mindestens einer Anschlagfläche umgeben sind. Insbesondere kann die Anschlagfläche derart angeordnet und ausgebildet sein, dass sie mit dem mindestens einen Dichtelement der Energiespeichervorrichtung in Kontakt steht und so quasi eine Dichtfläche bildet, wenn das Elektrogerät und die Energiespeichervorrichtung mechanisch und elektrisch miteinander gekoppelt sind.

Auf besonders einfache Weise lassen sich das Elektrogerät und die Energiespeichervorrichtung miteinander mechanisch in Eingriff bringen, wenn der mindestens eine Gerätekontaktvorsprung senkrecht von der mindestens einen Anschlagfläche vorsteht.

Damit das Elektrogerät und die Energiespeichervorrichtung in der Kopplungsstellung sicher relativ zueinander abgedichtet werden können, ist es günstig, wenn die mindestens eine Anschlagfläche in sich geschlossen ausgebildet ist. Insbesondere kann so ein in sich geschlossenes Dichtelement vollumfänglich an der mindestens eine Anschlagfläche abdichtend anliegen.

Gemäß einer weiteren Ausführungsform kann vorgesehen sein, dass eine Höhe des mindestens einen Gerätekontaktvorsprungs größer ist als eine Breite der mindestens einen Anschlagfläche. Alternativ kann die Höhe auch kleiner sein als die Breite. Ist die Höhe größer als die Breite, kann so eine besonders gute und sichere mechanische Kopplung zwischen dem mindestens einen Gerätekontaktvorsprung und der Kontaktöffnung erreicht werden.

Vorteilhaft ist es, wenn die mindestens eine Anschlagfläche eine in sich geschlossene Dichtrippe trägt. Insbesondere dann, wenn die mindestens eine Anschlagfläche dem mindestens einen Dichtelement der Energiespeichervorrichtung in der Kopplungsstellung gegenüberliegt, kann die mindestens eine in sich geschlossene Dichtrippe in das mindestens eine Dichtelement der Energiespeichervorrichtung eintauchen und so eine gezielte Verformung des Dichtelements erreichen, wodurch eine Dichtigkeit zwischen dem Elektrogerät und der Energiespeichervorrichtung verbessert werden kann. Die Dichtrippe kann insbesondere alle Gerätekontaktvorsprünge umgeben und eine einzige in sich geschlossene Dichtrippe bilden. Es können jedoch auch mehrere Dichtrippen vorgesehen sein, die jeweils einen Gerätekontaktvorsprung umgeben.

Ferner ist es günstig, wenn die mindestens zwei Gerätekontaktvorsprünge von einer Anschlagfläche umgeben sind. Die Anschlagfläche begrenzt insbesondere eine Einführtiefe der mindestens zwei Gerätekontaktvorsprünge in die korrespondierenden Kontaktöffnungen an der Energiespeichervorrichtung.

Auf einfache Weise ausbilden lässt sich das Elektrogerät, wenn die Anschlagflächen der mindestens zwei Gerätekontaktvorsprünge miteinander verbunden, einstückig oder monolithisch ausgebildet sind. Insbesondere können die Anschlagflächen einstückig oder monolithisch mit einem Wandabschnitt des Gerätegehäuses ausgebildet sein.

Vorzugsweise sind Längsachsen der mindestens zwei Gerätekontaktvorsprünge parallel zueinander ausgerichtet. Dies erleichtert das mechanische in Eingriff Bringen mit den korrespondierenden Kontaktöffnungen der Energiespeichervorrichtung. Vorzugsweise sind die Längsachsen der mindestens zwei Gerätekontaktvorsprünge senkrecht zu einem Gerätegehäusewandabschnitt ausgerichtet, der die Gerätekontaktvorsprünge trägt. Dies erleichtert sowohl die Herstellung als auch das in Eingriff bringen des Elektrogeräts mit der Energiespeichervorrichtung.

Die Herstellung des Elektrogeräts kann insbesondere dadurch vereinfacht werden, dass die mindestens zwei Gerätekontakte von einem Kontaktträger umgeben angeordnet sind und dass der Kontaktträger parallel oder im Wesentlichen parallel zu einer Längsachse der Gerätekontakte verschiebbar am Gerätegehäuse gelagert ist. Diese Anordnung der mindestens zwei Gerätekontakte ermöglicht es insbesondere, die Gerätekontaktvorsprünge in definierter Weise in die Kontaktöffnungen der Energiespeichervorrichtung hineinzubewegen. Die Gerätekontakte können am Kontaktträger insbesondere feststehend oder relativ zu diesem beweglich, insbesondere verschiebbar, angeordnet sein. Im letztgenannten Fall können Sie in einer Schutzstellung vom Kontaktträger umgeben und in einer Kontaktstellung mindestens teilweise über diesen vorstehend angeordnet sein.

Vorteilhaft ist es, wenn der Kontaktträger relativ zu den Gerätekontakten verschiebbar am Gerätegehäuse gelagert ist. Diese Anordnung der mindestens zwei Gerätekontakte ermöglicht es insbesondere, diese fest, also insbesondere unbeweglich, am Gerätegehäuse anzuordnen. Der Kontaktträger kann dann insbesondere als Schutz für die Gerätekontakte vor mechanischen Beschädigungen und/oder vor Verschmutzung dienen. Insbesondere kann der Kontaktträger in einer Trennstellung, in welcher das Elektrogerät und die elektrische Energiespeichervorrichtung vollständig voneinander getrennt sind, die Gerätekontakte derart umgeben, dass keine elektrisch leitfähigen Teile über die Gerätekontaktvorsprünge vorstehen. Werden die elektrische Energiespeichervorrichtung und das Elektrogerät mechanisch und/oder elektrisch miteinander in Eingriff gebracht, kann beispielsweise das Gehäuse den Kontaktträger zurückschieben, so dass die Gerätekontakte zugänglich werden und mit den Kontakten der Energiespeichervorrichtung in Eingriff gebracht werden können.

Günstig ist es, wenn das Elektrogerät eine Vorspanneinrichtung umfasst, die den Kontaktträger in einer Grundstellung in Richtung auf ein freies Ende der mindestens zwei Gerätekontakte hin vorspannend hält. Diese Ausgestaltung ermöglicht es insbesondere, den Kontaktträger gegen das mindestens eine Dichtelement der Energiespeichervorrichtung zu drücken, wenn das Elektrogerät und die Energiespeichervorrichtung miteinander gekoppelt sind. Dadurch kann eine Abdichtung zwischen der Energiespeichervorrichtung und dem Elektrogerät verbessert werden. Insbesondere können so Fertigungstoleranzen auf einfache Weise ausgeglichen werden. Insbesondere kann der Kontaktträger in der Grundstellung die oben beschriebene Schutzstellung einnehmen, in der er die Gerätekontakte schützend umgibt. So kann insbesondere beim Koppeln der Energiespeichervorrichtung mit dem Elektrogerät der Kontaktträger automatisch entgegen der Wirkung der Vorspanneinrichtung bewegt werden, um die zunächst in der Schutzstellung geschützten Gerätekontakte freizugeben.

Auf einfache Weise ausbilden lässt sich die Vorspanneinrichtung, wenn diese mindestens ein vorspannendes Element umfasst, das sich einerseits am Gerätegehäuse und andererseits am Kontaktträger abstützt oder einerseits am Gerätegehäuse und andererseits am Kontaktträger gehalten ist. Insbesondere kann das vorspannende Element elastische Eigenschaften aufweisen, um den Kontaktträger automatisch in die Grundstellung zu überführen, wenn der Kontaktträger aus der Grundstellung entgegen der Wirkung des mindestens einen vorspannenden Elements ausgelenkt wird. Insbesondere kann die Vorspanneinrichtung zwei, drei oder mehr vorspannende Elemente umfassen. Diese können insbesondere symmetrisch angeordnet sein.

Günstigerweise ist das vorspannende Element in Form eines Federelements ausgebildet. Insbesondere kann es in Form einer Druck- oder Zugfeder ausgebildet sein. Das Federelement kann insbesondere teilweise in eine topfförmige Aufnahme eingreifen, die entweder am Kontaktträger oder am Gehäuse ausgebildet sein kann.

Vorteilhaft ist es, wenn das mindestens eine vorspannende Element eine Wirkrichtung definiert, welche parallel oder im Wesentlichen parallel zu Längsachsen der mindestens zwei Gerätekontakte verläuft. So kann insbesondere der Kontaktträger parallel zu den Längsachsen der mindestens zwei Gerätekontakte durch das mindestens eine vorspannende Element bewegt werden. Dadurch kann die Gefahr eines Verklemmens oder Verkantens des mindestens einen Gerätekontaktvorsprungs beim Einführen in die Kontaktöffnung minimiert werden.

Vorzugsweise ist der elektrische Verbraucher des Elektrogeräts in Form eines Elektromotors ausgebildet. Dieser kann insbesondere rotierende und/oder oszillierende Werkzeuge antreiben, beispielsweise Schneideinrichtungen von Gartengeräten.

Günstig ist es, wenn das Elektrogerät ausgebildet ist zum wahlweisen Koppeln mit einer Mehrzahl von insbesondere unterschiedlichen elektrischen Energiespeichervorrichtungen. Abhängig von einer benötigten Einsatzzeit können dann ein oder mehrere Energiespeichervorrichtungen mit dem Elektrogerät gekoppelt werden. Beispielsweise können unterschiedliche Energiespeichervorrichtungen mit unterschiedlichen Ladekapazitäten mit dem Elektrogerät gekoppelt werden.

Zur Unterstützung bei der Gartenarbeit ist es günstig, wenn das Elektrogerät in Form eines elektrischen Gartengeräts ausgebildet ist. Insbesondere kann es in Form eines schiebbaren, fahrbaren oder tragbaren Gartengeräts ausgebildet sein.

Vorzugsweise ist das elektrische Gartengerät in Form eines Rasenmähers, einer Heckenschere, einer Kettensäge, eines Staubsauger, eines Hochdruckreinigungsgeräts oder eines Laubbläsers ausgebildet. Diese Liste von Gartengeräten ist rein beispielhaft und nicht abschließend.

Günstig ist es, insbesondere auch bei einem Elektrogerät der eingangs beschriebenen Art, wenn die elektrische Energiespeichervorrichtung in Form einer der oben beschriebenen Energiespeichervorrichtungen ausgebildet ist. Dabei ist es also keine zwingende Voraussetzung, dass die mindestens zwei Gerätekontakte von mindestens einem Gerätekontaktvorsprung vorstehend ausgebildet sind und dass der mindestens eine Gerätekontaktvorsprung einen vieleckigen Querschnitt aufweist. Falls dies jedoch der Fall sein sollte, kann eine optimale Kopplung sowohl mechanisch als auch elektrisch zwischen dem Elektrogerät und der Energiespeichervorrichtung hergestellt werden.

Selbstverständlich ist es umgekehrt auch möglich, das mindestens eine Dichtelement am Elektrogerät die mindestens zwei Gerätekontakte umgebend vorzusehen. Es versteht sich von selbst, dass dann sowohl an der elektrischen Energiespeichervorrichtung als auch am Elektrogerät entsprechende Anpassungen vorgenommen werden müssen. Das Dichtprinzip bleibt aber in jedem Fall erhalten.

Gemäß einer weiteren Ausführungsform kann vorgesehen sein, dass das Elektrogerät eine Kopplungseinrichtung zum kraft- und/oder formschlüssigen Koppeln des Elektrogeräts und der elektrischen Energiespeichervorrichtung in einer Kopplungsstellung umfasst, in welcher das Elektrogerät und die elektrische Energiespeichervorrichtung mechanisch und/oder elektrisch miteinander gekoppelt sind. Durch die Kopplungseinrichtung können also das Elektrogerät und die Energiespeichervorrichtung in definierter Weise miteinander in Eingriff gebracht werden, um mit der in der Energiespeichervorrichtung gespeicherten elektrischen Energie das Elektrogerät zu betreiben.

Vorzugsweise sind in der Kopplungsstellung die elektrischen Kontakte der Energiespeichervorrichtung und die Gerätekontakte des Elektrogeräts elektrisch leitend miteinander verbunden. So lässt sich auf einfache Weise elektrische Energie mit dem Elektrogerät aus der Energiespeichervorrichtung entnehmen.

Auf einfache Weise lassen sich das Elektrogerät und die Energiespeichervorrichtung miteinander koppeln, wenn die Kopplungseinrichtung mindestens ein erstes Kopplungselement und mindestens ein zweites Kopplungselement umfasst, wenn das mindestens eine erste Kopplungselement an der elektrischen Energiespeichervorrichtung angeordnet oder ausgebildet ist, wenn das mindestens eine zweite Kopplungselement am Elektrogerät angeordnet oder ausgebildet ist und wenn das mindestens eine erste und das mindestens eine zweite Kopplungselement in der Kopplungsstellung kraft- und/oder formschlüssig in Eingriff stehen. Beispielsweise können zwei oder mehr erste Kopplungselemente und zwei oder mehr zweite, zum ersten Kopplungselement korrespondierende Kopplungselemente vorgesehen sein. Mit diesen lassen sich das Elektrogerät und die Energiespeichervorrichtung in eine definierte Relativstellung zueinander bringen, um insbesondere eine sichere elektrische Verbindung zwischen den Gerätekontakten und den elektrischen Kontakten der Energiespeichervorrichtung herstellen zu können.

Auf einfache Weise ausbilden lässt sich die Kopplungseinrichtung, wenn das mindestens eine erste Kopplungselement in Form eines Kopplungsvorsprungs oder in Form einer Kopplungsausnehmung ausgebildet ist und wenn das mindestens eine zweite Kopplungselement korrespondierend zum mindestens einen ersten Kopplungselement ausgebildet ist. Beispielsweise können die Kopplungsvorsprünge in Form rippenartiger Vorsprünge ausgebildet sein und die korrespondierenden Kopplungsausnehmungen in Form von Führungsnuten, in die die Kopplungsvorsprünge eingeschoben werden können. So können die miteinander zusammenwirkenden Kopplungselemente auch ein Zusammenführen der Energiespeichervorrichtung und des Elektrogeräts von einer vollständig getrennten Stellung in die Kopplungsstellung führen.

Günstig ist es, wenn das mindestens eine erste und das mindestens eine zweite Kopplungselement in einer Trennstellung, in welcher das Elektrogerät und die elektrische Energiespeichervorrichtung vollständig voneinander getrennt sind, außer Eingriff stehen. Mit einer solchen Kopplungseinrichtung ist es insbesondere möglich, die Energiespeichervorrichtung vollständig vom Elektrogerät zu trennen, beispielsweise um die Energiespeichervorrichtung an einer Ladevorrichtung wieder mit elektrischer Energie aufzuladen.

Ferner kann es vorteilhaft sein, wenn das Elektrogerät eine Verriegelungseinrichtung zum Verriegeln einer Kopplung des Elektrogeräts und der elektrischen Energiespeichervorrichtung in einer Verriegelungsstellung umfasst. Mit der Verriegelungsstellung kann sichergestellt werden, dass sich die Energiespeichervorrichtung nicht selbsttätig und unbeabsichtigt vom Elektrogerät lösen kann. Insbesondere kann die Verriegelungseinrichtung derart ausgebildet sein, dass sie mechanisch und/oder elektrisch aktivierbar ist, um die Energiespeichervorrichtung und das Elektrogerät wieder voneinander zu trennen.

Günstig ist es, wenn die Verriegelungseinrichtung mindestens ein erstes Verriegelungselement und mindestens ein zweites Verriegelungselement umfasst, wenn das mindestens eine erste Verriegelungselement an der elektrischen Energiespeichervorrichtung angeordnet oder ausgebildet ist, wenn das mindestens eine zweite Verriegelungselement am Elektrogerät angeordnet oder ausgebildet ist und wenn das mindestens eine erste und das mindestens eine zweite Verriegelungselement in der Verriegelungsstellung kraft- und/oder formschlüssig in Eingriff stehen. Die mindestens einen ersten und zweiten Verriegelungselemente können insbesondere unabhängig von den Kopplungselementen ausgebildet sein. Sie können optional jedoch auch direkt oder indirekt mit den Kopplungselementen zusammenwirken. Beispielsweise kann ein Verriegelungselement an einem der Kopplungselemente angeordnet oder ausgebildet sein. Durch die Verriegelungseinrichtung kann wie beschrieben verhindert werden, dass sich die Energiespeichervorrichtung unbeabsichtigt vom Elektrogerät lösen kann.

Ferner ist es vorteilhaft, wenn die Kopplungseinrichtung und die Verriegelungseinrichtung derart ausgebildet sind, dass das mindestens eine erste und das mindestens eine zweite Verriegelungselement nur dann in die Verriegelungsstellung bringbar sind, wenn die Kopplungseinrichtung die Kopplungsstellung einnimmt. Mit einer solchen Verriegelungseinrichtung ist es also nur möglich, die miteinander in Eingriff stehenden Kopplungselemente gegen eine Relativbewegung zu sichern, wenn diese die Kopplungsstellung einnehmen.

Vorteilhaft ist es, wenn das mindestens eine erste Verriegelungselement und/ oder das mindestens eine zweite Verriegelungselement beweglich angeordnet und von der Verriegelungsstellung in eine Entriegelungsstellung bewegbar sind, in welcher Entriegelungsstellung das mindestens eine erste Verriegelungselement und das mindestens eine zweite Verriegelungselement außer Eingriff stehen. Durch die bewegliche Anordnung oder Ausbildung eines der Verriegelungselemente ist es auf einfache Weise möglich, die Verriegelungseinrichtung von der Verriegelungsstellung in die Entriegelungsstellung zu überführen und umgekehrt.

Günstig ist es, wenn das Elektrogerät eine Rückstelleinrichtung zum automatischen Überführen des mindestens einen ersten und/oder des mindestens einen zweiten Verriegelungselements von der Entriegelungsstellung in die Verriegelungsstellung aufweist. Mit der Rückstelleinrichtung ist es insbesondere möglich, eine Verbindung zwischen dem Elektrogerät und der Energiespeichervorrichtung automatisch zu verriegeln, und zwar dann, wenn die Energiespeichervorrichtung und das Elektrogerät relativ zueinander in die Kopplungsstellung bewegt werden und/oder diese einnehmen. Dann kann beispielsweise die Rückstelleinrichtung die Verriegelungselemente der Verriegelungseinrichtung relativ zueinander derart automatisch bewegen, dass diese in Eingriff gelangen.

Vorteilhaft ist es, wenn die Rückstelleinrichtung mindestens ein Rückstellelement umfasst, welches sich einerseits am Gerätegehäuse und andererseits am mindestens einen zweiten Verriegelungselement abstützt oder einerseits am Gerätegehäuse und andererseits am mindestens einen zweiten Verriegelungselement gehalten ist. Insbesondere können auch zwei, drei oder mehr Rückstellelemente vorgesehen sein. Die Zahl der Rückstellelemente kann insbesondere von der Zahl der ersten und/oder zweiten Verriegelungselemente abhängen. Beispielsweise kann das mindestens eine Rückstellelement an einem der Verriegelungselemente gehalten oder gelagert sein.

Vorzugsweise ist das mindestens eine Rückstellelement in Form eines Federelements ausgebildet. Beispielsweise kann es in Form einer Druck- oder Zugfeder ausgebildet sein. Abhängig vom konstruktiven Aufbau der Verriegelungseinrichtung kann wahlweise eine Druck- oder Zugfeder als Rückstellelement eingesetzt werden.

Vorteilhaft ist es, wenn das mindestens eine Rückstellelement eine Wirkrichtung definiert, welche quer, insbesondere senkrecht, zur Wirkrichtung des mindestens einen vorspannenden Elements verläuft. Insbesondere kann die vom mindestens einen Rückstellelement definierte Wirkrichtung quer zu einer Kopplungsrichtung verlaufen, in welcher die Energiespeichervorrichtung und das Elektrogerät relativ zueinander bewegt werden müssen, um diese von der Trennstellung in die Kopplungsstellung zu überführen. Sind die Wirkrichtungen des Rückstellelements und des vorspannenden Elements linear unabhängig voneinander, kann insbesondere eine optimale Verriegelung der Kopplungsstellung durch die Verriegelungseinrichtung erreicht werden.

Auf einfache Weise ausbilden lässt sich die Verriegelungseinrichtung, wenn das mindestens eine erste Verriegelungselement in Form eines Verriegelungsvorsprungs oder in Form einer Verriegelungsausnehmung ausgebildet ist und wenn das mindestens eine zweite Verriegelungselement korrespondierend zum mindestens einen ersten Kopplungselement ausgebildet ist. Zum Beispiel kann der Verriegelungsvorsprung in Form eines Rastvorsprungs ausgebildet sein, welcher beispielsweise eine Rastnase aufweisen kann, die in eine korrespondierende Rastausnehmung in der Verriegelungsstellung eingreift.

Um die Energiespeichervorrichtung wieder vom Elektrogerät zu trennen, wenn diese in der Kopplungsstellung relativ zueinander gegen eine Bewegung verriegelt sind, ist es vorteilhaft, wenn am mindestens einen ersten beweglich angeordneten Verriegelungselement und/oder am mindestens einen zweiten beweglich angeordneten Verriegelungselement ein Betätigungsglied angeordnet oder ausgebildet oder diesem zugeordnet ist zum Einleiten einer Betätigungskraft zum Überführen des mindestens einen ersten beweglich angeordneten Verriegelungselements und/oder des mindestens einen zweiten beweglich angeordneten Verriegelungselements von der Verriegelungsstellung in die Entriegelungsstellung. Auf das Betätigungsglied kann also eine Betätigungskraft ausgeübt werden, die eines der Verriegelungselemente bewegt, so dass die miteinander in Eingriff stehenden Verriegelungselemente außer Eingriff gebracht werden. Dann lassen sich die Energiespeichervorrichtung und das Elektrogerät voneinander trennen.

Auf einfache Weise kann ein Anwender die Energiespeichervorrichtung vom Elektrogerät trennen, wenn das Betätigungsglied am Gehäuse oder am Gerätegehäuse frei zugänglich angeordnet ist.

Ferner ist es vorteilhaft, wenn die Vorspanneinrichtung den Kontaktträger in der Verriegelungsstellung derart unter Vorspannung hält, dass die mindestens eine Dichtrippe unter Vorspannung gegen das mindestens eine Dichtelement gehalten ist. Durch diese Ausgestaltung kann eine besonders gute Abdichtung zwischen der Energiespeichervorrichtung und dem Elektrogerät erreicht werden, wenn diese mechanisch und/oder elektrisch miteinander gekoppelt sind.

Weiterhin lässt sich eine besonders gute Abdichtung zwischen dem Elektrogerät und der Energiespeichervorrichtung erreichen, wenn die Vorspanneinrichtung den Kontaktträger in der Verriegelungsstellung derart unter Vorspannung hält, dass die mindestens eine Dichtrippe unter Vorspannung gegen das mindestens eine Dichtelement gehalten ist. So kann die mindestens eine Dichtrippe des mindestens einen Dichtelements so weit verformen, dass es teilweise ins mindestens eine Dichtelement eintaucht und so eine besonders gute Abdichtung zwischen der Anschlagfläche, von der die mindestens eine Dichtrippe absteht, und dem mindestens eine Dichtelement zu erreichen.

Um Fertigungstoleranzen auszugleichen und insbesondere auch eine besonders gute Abdichtung zwischen dem Elektrogerät und der Energiespeichervorrichtung sicherstellen zu können, ist es günstig, wenn das mindestens eine Dichtelement aus einem Dichtelementmaterial ausgebildet ist, das weicher ist als das Material, aus dem die mindestens eine Anschlagfläche und/oder die mindestens eine Dichtrippe ausgebildet sind. So kann eine optimale Abdichtung zwischen dem mindestens einen Dichtelement und der mindestens einen Anschlagfläche beziehungsweise der mindestens einen Dichtrippe erreicht werden.

Auf einfache und kostengünstige Weise lässt sich das mindestens eine Dichtelement herstellen, wenn das elastische Material ein Gummi, insbesondere Ethylen-Propylen-Dien-Kautschuk (EPDM), Nitrilkautschuk (NBR) oder Polyurethan (PUR), oder ein thermoplastisches Elastomer, ein thermoplastisches Copolyamid, ein thermoplastisches Polyesterelastomer, ein thermoplastischer Copolyester, ein thermoplastisches Elastomer auf Olefinbasis, ein Styrol-Blockcopolymer, ein thermoplastisches Elastomer auf Urethanbasis oder ein vernetztes thermoplastisches Elastomer auf Olefinbasis ist.

Vorteilhaft ist es, insbesondere auch bei einem Elektrogerät der eingangs beschriebenen Art, wenn das Gerätegehäuse mindestens eine Kontaktöffnung aufweist, durch die hindurch die mindestens zwei Gerätekontakte zugänglich sind oder aus dem Gerätegehäuse vorstehen, und wenn die mindestens eine Kontaktöffnung von einem in sich geschlossenen Dichtelement umgeben ist. Das Dichtelement kann insbesondere analog dem oben beschriebenen Dichtelement an der Energiespeichervorrichtung ausgebildet sein. Für eine optimale Abdichtung des Elektrogeräts und der Energiespeichervorrichtung kann an der Energiespeichervorrichtung optional mindestens eine Anschlagfläche ausgebildet sein, die dann, wenn das Elektrogerät und die Energiespeichervorrichtung elektrisch und/oder mechanisch miteinander in Eingriff stehen, am Dichtelement anliegt. Oder es kann auch an der Energiespeichervorrichtung ein Dichtelement vorgesehen sein, das dann am Dichtelement des Elektrogeräts anliegt.

Die nachfolgende Beschreibung bevorzugter Ausführungsformen der Erfindung dient im Zusammenhang mit den Zeichnungen der näheren Erläuterung. Es zeigen:
- Figur 1:: eine schematische perspektivische Darstellung eines Teils eines nicht erfindungsgemäßen Elektrogeräts mit einer an diesem gekoppelten erfindungsgemäßen Energiespeichervorrichtung;
- Figur 2:: eine perspektivische, ausschnittsweise Ansicht des nicht erfindungs-gemäßen Elektrogeräts;
- Figur 3:: eine Schnittansicht längs Linie 3-3 in Figur 2;
- Figur 4:: eine Schnittansicht längs Linie 4-4 in Figur 1;

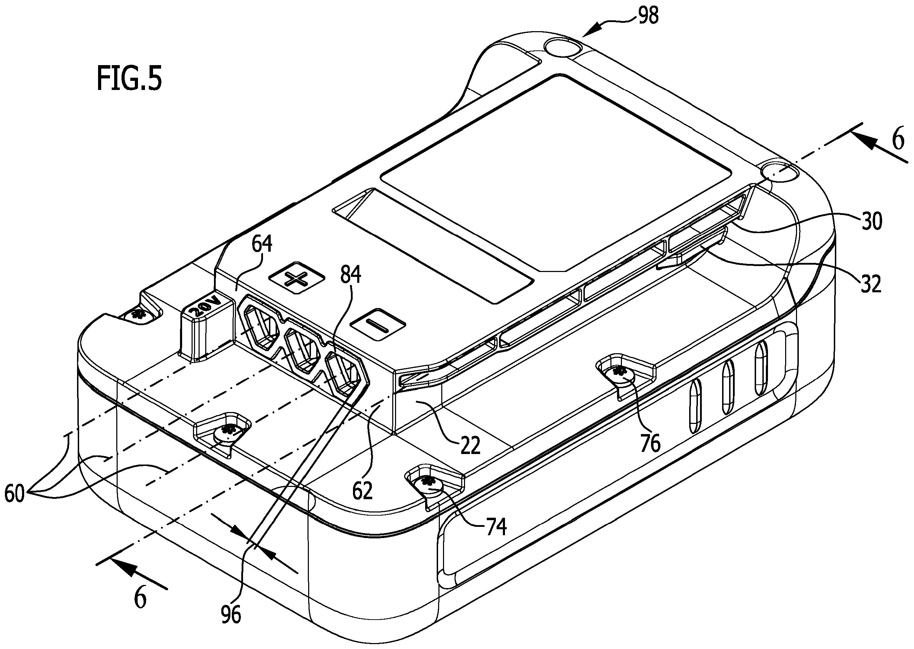

- Figur 5:: eine perspektivische Ansicht der Energiespeichervorrichtung aus Figur 1;
- Figur 6:: eine Schnittansicht längs Linie 6-6 in Figur 5;
- Figur 7:: eine Schnittansicht längs Linie 7-7 in Figur 1;
- Figur 7a:: eine Vergrößerung des Ausschnitts A in Figur 7;
- Figur 8:: eine Draufsicht auf die Energiespeichervorrichtung im Bereich der Kontaktöffnungen; und

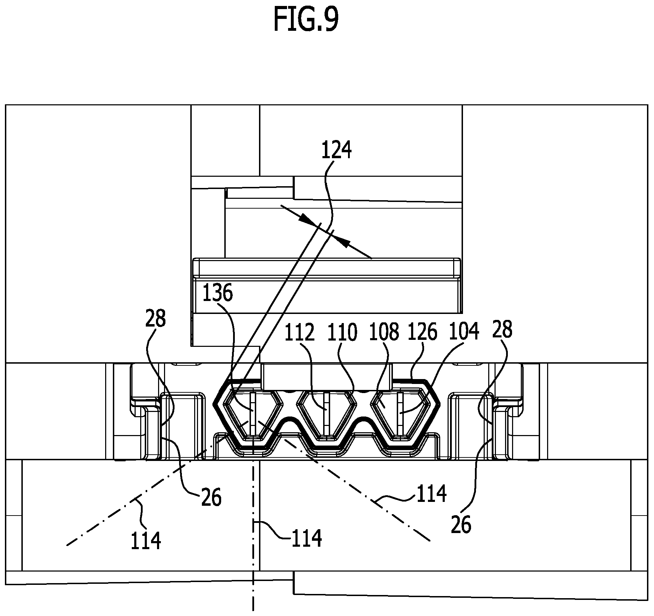

- Figur 9:: eine Draufsicht auf das Elektrogerät im Bereich der Gerätekontakte.

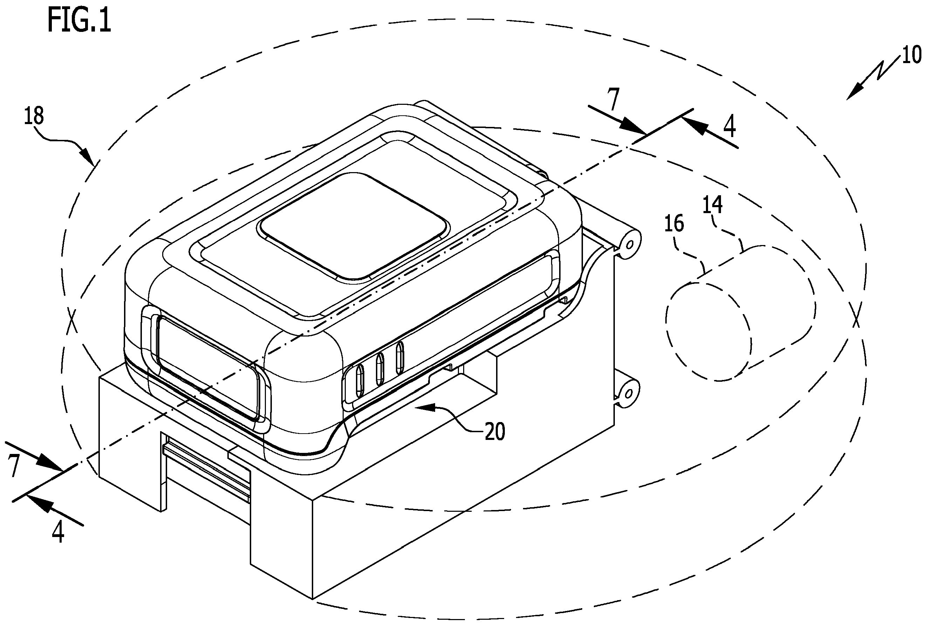

In Figur 1 ist schematisch ein Elektrogerät 10 dargestellt, das mechanisch und elektrisch mit einer elektrischen Energiespeichervorrichtung 12 in einer Kopplungsstellung gekoppelt ist.

Das Elektrogerät 10 umfasst mindestens einen elektrischen Verbraucher 14, welcher insbesondere in Form eines Elektromotors 16 ausgebildet sein kann.

Das Elektrogerät 10 kann beispielsweise in Form eines elektrischen Gartengeräts 18 ausgebildet sein, insbesondere in Form eines Rasenmähers, einer Heckenschere, einer Kettensäge, eines Staubsauger, eines Hochdruckreinigungsgeräts oder eines Laubbläsers.

Die elektrische Energiespeichervorrichtung 12 dient zum Versorgen des elektrischen Verbrauchers 14 mit elektrischer Energie.

Zum kraft- und/oder formschlüssigen Koppeln des Elektrogeräts 10 mit der elektrischen Energiespeichervorrichtung 12 dient eine Kopplungseinrichtung 20. In der Kopplungsstellung sind das Elektrogerät 10 und die elektrische Energiespeichervorrichtung 12 insbesondere mechanisch miteinander gekoppelt.

Die Kopplungseinrichtung 20 umfasst zwei erste Kopplungselemente 22, die in Form nutförmiger Kopplungsausnehmungen 24 parallel zueinander verlaufend an der Energiespeichervorrichtung 12 ausgebildet sind.

Am Elektrogerät 10 sind zwei zweite Kopplungselemente 26 in Form von aufeinander zu weisenden Kopplungsvorsprüngen 28 ausgebildet, die in der in Figur 1 schematisch dargestellten Kopplungsstellung in die voneinander weg weisend geöffneten Kopplungsausnehmungen 24 eingreifen. In den Kopplungsausnehmungen 24 sind im Bereich von deren hinteren Enden 30 zwei Zentrierrippen 32 parallel zu den Kopplungsausnehmungen 24 in Richtung auf die Kopplungsvorsprünge 28 hin weisend abstehend.

Ausgehend von freien Enden 34 der Kopplungsvorsprünge 28 sind an diesen Rücksprünge 36 ausgebildet, die zusammenwirkend mit den Zentrierrippen 32 die Energiespeichervorrichtung 12 am Elektrogerät 10 in definierter Weise ausrichten und zudem einen Tiefenanschlag bilden durch schräg verlaufende Anschlagflächen 38 im Übergangsbereich vom Rücksprung 36 zum jeweiligen Kopplungsvorsprung 28.

Die ersten und zweiten Kopplungselemente 22, 26 stehen in der Kopplungsstellung kraft- und/oder formschlüssig in Eingriff.

In einer Trennstellung, in welcher das Elektrogerät 10 und die elektrische Energiespeichervorrichtung 12 vollständig voneinander getrennt sind, stehen die ersten und zweiten Kopplungselemente 22, 26 außer Eingriff.

Die elektrische Energiespeichervorrichtung 12 umfasst ein Gehäuse 40, welches einen Aufnahmeraum 42 definiert, in welchem mindestens ein elektrischer Energiespeicher 44 aufgenommen ist. Bei dem in den Figuren dargestellten Ausführungsbeispiel einer Energiespeichervorrichtung 12 sind insgesamt fünf Energiespeicher 40 im Aufnahmeraum 42 angeordnet.

Die Energiespeicher 44 sind in Form wiederaufladbarer Batterien 46 ausgebildet. Es kann sich dabei um Akkumulatoren wie insbesondere Nickel-Metallhydrid-Akkumulatoren, Lithium-Ionen-Akkumulatoren oder Lithium-Polymer-Ackumulatoren handeln.

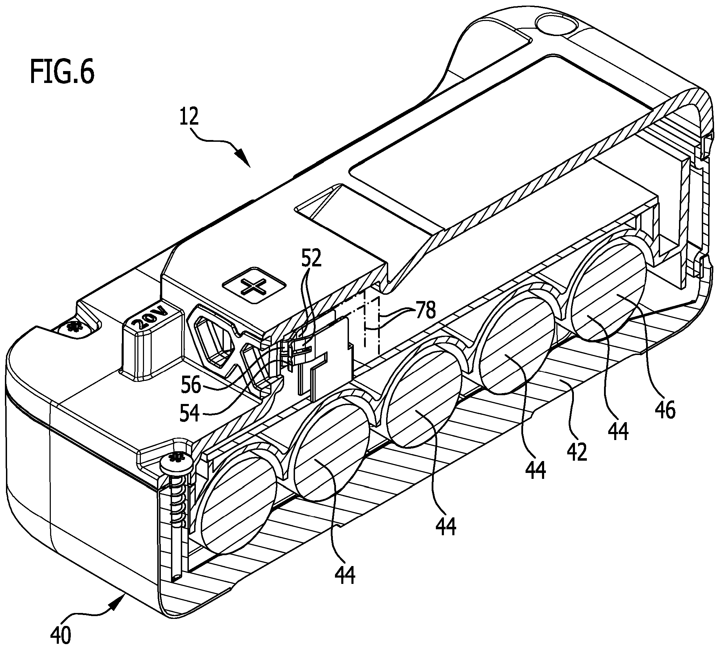

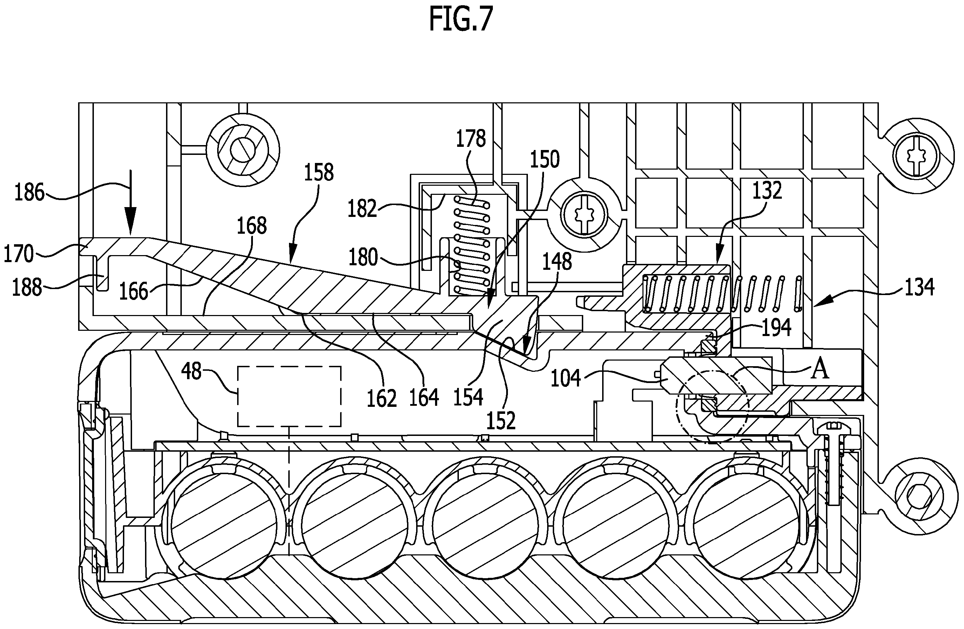

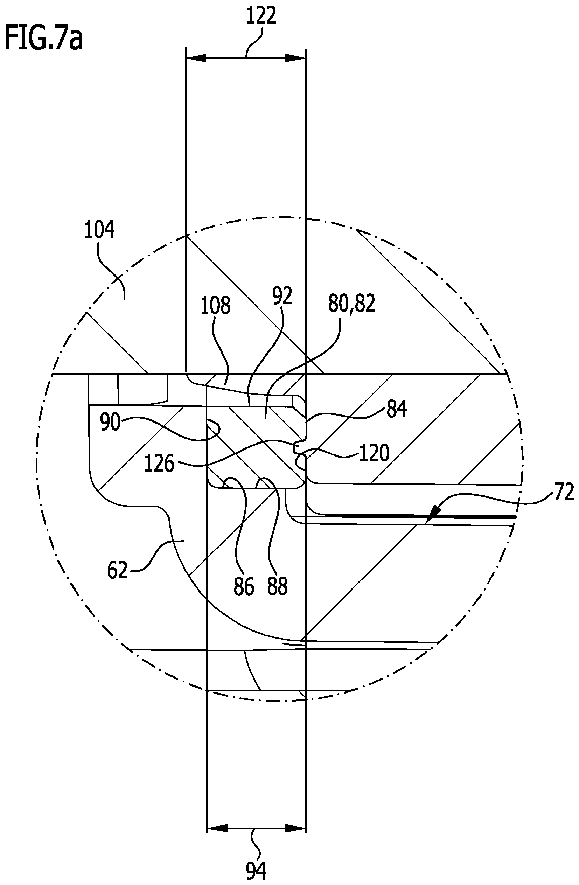

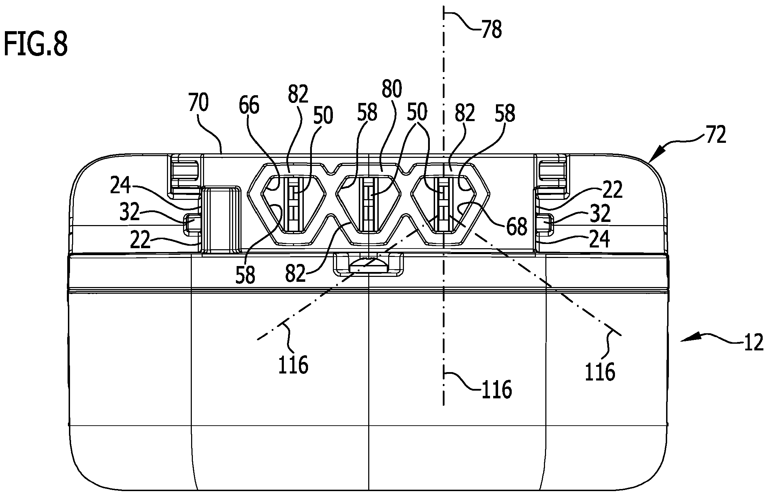

Die Energiespeicher 44 können je nach gewünschter Ausgangsspannung parallel und/oder in Serie geschaltet sein. Sie sind direkt oder indirekt über eine Steuereinrichtung 48, die rein schematisch in Figur 7 gestrichelt eingezeichnet ist, mit zwei von insgesamt drei elektrischen Kontakten 50 in elektrischer Wirkverbindung stehend. Die Kontakte 50 umfassen jeweils zwei elektrisch leitende, federnd ausgebildete Kontaktzungen 52, welche in einer Grundstellung, wie schematisch in den Figuren 6 und 8 dargestellt, aneinander anliegen. Wahlweise können sie auch einen schmalen Spalt zwischen sich definieren. Freie, vom Aufnahmeraum 42 weg weisend ausgerichtete Enden 54 der beiden Kontaktzungen 52 sind voneinander weg weisend gekrümmt zur Ausbildung von Aufgleitflächen 56.

Die drei Kontakte 50 sind jeweils durch eine Kontaktöffnung 58 des Gehäuses 40 hindurch zugänglich.

Die Kontaktöffnungen sind im Querschnitt sechseckig ausgebildet, wie in Figur 8 gut zu erkennen.

Längsachsen 60 der Kontaktöffnungen 50 sind parallel zueinander ausgerichtet und verlaufen senkrecht zu einem ebenen Gehäusewandabschnitt 62 des Gehäuses 40. Ein von der Zentrierrippe 32 weg weisendes Ende der Kopplungsausnehmungen 24 endet auf Höhe einer vom Gehäusewandabschnitt 62 nach außen weisenden Wandabschnittsfläche 64.

Die Kontaktöffnungen 58 weisen bezogen auf ihre jeweiligen Längsachsen 60 eine dreizählige Symmetrie auf. Die Kontaktöffnungen 58 werden abwechselnd durch kurze Seiten 66 und lange Seiten 68 eines Sechsecks begrenzt.

Der Gehäusewandabschnitt 62 ist senkrecht zu einer Seitenwand 70 eines Gehäuseoberteils 72 an diesem ausgebildet. Das Gehäuseoberteil 72 ist mit Befestigungselementen 74 in Form von Befestigungsschrauben 76 am Gehäuse 40 festgelegt.

Parallel zur Seitenwand 70 verlaufen drei fluchtend ausgerichtete lange Seiten 68 der nebeneinander angeordneten Kontaktöffnungen 58.

Die Längsachsen 60 der Kontaktöffnungen 58 definieren auch die von den Kontakten 50 definierten Längsachsen. Die aus flachen Streifen geformten Kontaktzungen 52 definieren jeweils eine Kontaktebene 78, die senkrecht zur Seitenwand 70 verläuft.

Die Kontaktöffnungen 58 umgebend ist am Gehäusewandabschnitt 62 ein Dichtelement 80 angeordnet. Es weist vom Gehäusewandabschnitt 62 weg. Das Dichtelement 80 wird durch insgesamt drei identische Dichtelemente 82 definiert, die jeweils für sich eine Kontaktöffnung 58 umgebend angeordnet sind. Die Dichtelemente 82 sind zur Ausbildung des Dichtelements 80 miteinander verbunden.

Eine vom Gehäusewandabschnitt 62 weg weisende Anlagefläche 84 verläuft parallel zur Wandabschnittsfläche 64 und steht etwas über diese vor. Optional kann die Anlagefläche 84 auch flächenbündig mit der Wandabschnittsfläche 64 oder etwas gegenüber dieser zurückgesetzt im Gehäusewandabschnitt 62 ausgebildet sein.

Im Übergangsbereich vom Gehäusewandabschnitt 62 zur jeweiligen Kontaktöffnung 58 ist ein Rücksprung 86 ausgebildet, welcher einerseits in Richtung auf die Kontaktöffnung 58 eine aus sechs Flächenbereichen ausgebildete Rücksprunginnenfläche 88 aufweist sowie andererseits eine parallel zur Wandabschnittsfläche 64 vom Gehäuseoberteil 72 weg weisende Dichtfläche 90.

Das Dichtelement 80 beziehungsweise 82 füllt den Rücksprung 86 praktisch vollständig aus.

Das Dichtelement 80 beziehungsweise die Dichtelemente 82 bilden, wie in Figur 7a gut zu erkennen, einen Teil einer die jeweilige Kontaktöffnung 58 begrenzende Innenwandfläche 92.

Die Kontaktöffnungen 58 sind identisch ausgebildet. Ferner ist jedem Kontakt 50 eine Kontaktöffnung 58 zugeordnet.

Die Anzahl der elektrisch leitenden Kontakte 50 entspricht zudem der Anzahl der Kontaktöffnungen 58.

Die Dichtelemente 80 beziehungsweise 82 können insbesondere in Form von Formdichtungen oder als O-Ringe ausgebildet sein. Ferner können sie auch auf das Gehäuse 40, beziehungsweise das Gehäuseoberteil 72, durch Spritzgießen aufgespritzt sein. Das Gehäuse 40 beziehungsweise das Gehäuseoberteil 72 können selbst durch Kunststoffspritzgießen aus einem geeigneten Kunststoff hergestellt sein.

Die Dichtelemente 80 beziehungsweise 82 sind aus einem Dichtelementmaterial ausgebildet. Der Gehäusewandabschnitt 62, optional auch das gesamte Gehäuseoberteil 72 sowie das Gehäuse 40, können teilweise oder vollständig aus einem Gehäusematerial ausgebildet sein. Das Gehäusematerial ist vorzugsweise härter als das Dichtelementmaterial. Mit anderen Worten ist das Dichtelementmaterial weicher als das Gehäusematerial und insbesondere elastisch verformbar ausgebildet. Eine Dicke 94 der Dichtelemente 80 beziehungsweise 82 liegt insbesondere in einem Bereich von etwa 0,2 mm bis etwa 2 mm. Insbesondere kann die Dicke 94 in einem Bereich von etwa 0,4 mm bis etwa 0,8 mm liegen.

Eine Breite 96 des Dichtelements 80 beziehungsweise 82, die sich parallel zur Dichtfläche 90 erstreckt, beträgt vorzugsweise etwa 0,5 mm bis etwa 5 mm. Sie kann jedoch in einem Bereich von nur etwa 1,5 mm bis etwa 2,5 mm liegen.

Die Dichtelemente 80 beziehungsweise 82 sind aus einem elastischen Material ausgebildet oder enthalten ein elastisches Material.

Das elastische Material kann insbesondere ein Kunststoff sein, beispielsweise ein thermoplastischer Kunststoff, oder ein Gummi, zum Beispiel Ethylen-Propylen-Dien-Kautschuk (EPDM), Nitrilkautschuk (NBR) oder Polyurethan (PUR). Der Kunststoff oder das Kunststoffgemisch sind oder enthalten vorzugsweise ein thermoplastisches Elastomer oder mehrere thermoplastische Elastomere.

Als thermoplastische Elastomere können zur Ausbildung der Dichtelemente 80 beziehungsweise 82 thermoplastische Copolyamide, thermoplastische Polyesterelastomere, thermoplastische Copolyester, thermoplastische Elastomere auf Olefinbasis , Styrol-Blockcopolymere, thermoplastische Elastomere auf Urethanbasis oder vernetzte thermoplastische Elastomere auf Olefinbasis zum Einsatz kommen.

Die beschriebene Energiespeichervorrichtung 12 ist ferner zum wahlweisen Koppeln mit unterschiedlichen Elektrogeräten 10 ausgebildet. Dies ist insbesondere dann möglich, wenn die zweiten Kopplungselemente 26 der Kopplungseinrichtung 20 an den unterschiedlichen Elektrogeräten 10 so ausgebildet sind, dass sie mit den ersten Kopplungselementen 22 der Energiespeichervorrichtung 12 in der Kopplungsstellung in Eingriff bringbar sind.

Die Energiespeichervorrichtung 12 kann alternativ auch als Akkupack 98 bezeichnet werden.

Die Form der Gehäuseöffnungen 58 kann insbesondere auch als wankeiförmig bezeichnet werden.

Das Elektrogerät 10 umfasst ein Gerätegehäuse 100, das in den Figuren nur teilweise und schematisch dargestellt ist. In ihm ist der Verbraucher 14 mindestens teilweise, insbesondere vollständig, aufgenommen.

Von einer Außenseite 102 des Gerätegehäuses 100 sind elektrisch leitende Gerätekontakte 104 zugänglich, in einer in den Figuren nicht dargestellten Grundstellung jedoch geschützt beziehungsweise verdeckt angeordnet. Diese sind direkt oder indirekt über eine nicht näher dargestellte Steuereinrichtung des Elektrogeräts 10 mit dem Verbraucher 14 elektrisch wirkverbunden. Das in den Figuren schematisch dargestellte Elektrogerät 10 weist drei identische Gerätekontakte 104 in Form von Kontaktstiften 106 auf, die insbesondere flach und plättchenförmig am Gerätegehäuse 100 feststehend ausgebildet sind.

Die Gerätekontakte 104 sind in der oben beschriebenen Schutzstellung, in welcher das Elektrogerät 10 und die Energiespeichervorrichtung 12 mechanisch und/oder elektrisch voneinander getrennt sind, von Gerätekontaktvorsprüngen 108 umgeben und stehen in einer Kopplungsstellung, in welcher sie mit den Kontakten 50 in Eingriff stehen, über die Gerätekontaktvorsprünge 108 vor. Die Gerätekontaktvorsprünge 108 weisen einen vieleckigen Querschnitt auf und sind relativ zu den Gerätekontakten 104 beweglich angeordnet. Dieser kann insbesondere drei-, vier-, fünf-, sechs- oder siebeneckig geformt sein.

Ein Querschnitt der Gerätekontaktvorsprünge 108 ist korrespondierend zu den Querschnitten der Kontaktöffnungen 58 ausgebildet, so dass die Gerätekontaktvorsprünge 108 in der Kopplungsstellung formschlüssig in die Kontaktöffnungen 58 eingreifen können. Jeder Gerätekontaktvorsprung weist sechs Außenflächen auf, und zwar jeweils drei schmale Außenflächen 110 und drei abwechselnd zu diesen angeordnete breite Außenflächen 112.

Jeder der drei Gerätekontaktvorsprünge 108 weist bei dem in den Figuren dargestellten Ausführungsbeispiel drei Symmetriebenen 114 auf, die jeweils zwischen sich einen Winkel von 60° einschließen. Diese Symmetriebenen 114 fallen mit drei analog zueinander ausgerichteten Symmetriebenen 116 zusammen, wenn die Energiespeichervorrichtung 12 und das Elektrogerät 10 die Kopplungsstellung einnehmen.

Jedem der Gerätekontaktvorsprünge 108 ist einer der drei Gerätekontakte 104 zugeordnet. Sowohl die Gerätekontaktvorsprünge 108 als auch die Gerätekontakte 104 sind jeweils identisch ausgebildet.

Ein Querschnitt der Gerätekontaktvorsprünge 108 verjüngt sich auf ein freies Ende, das durch eine ebene Endfläche 118 definiert wird, hin.

Die Gerätekontakte 104 sind von einer Anschlagfläche 120 umgeben, und zwar derart, dass die Gerätekontaktvorsprünge 108 senkrecht von dieser Anschlagfläche 120 vorstehen.

Die Anschlagfläche 120 ist in sich geschlossen ausgebildet und weist im Wesentlichen eine Form auf, die in Draufsicht einer Kontur des Dichtelements 80 entspricht.

Eine Höhe 122 der Gerätekontaktvorsprünge 108 ist größer als eine Breite 124 der Anschlagfläche 120.

Von der Anschlagfläche 120 abstehend ist eine Dichtrippe 126 ausgebildet.

Nehmen die Energiespeichervorrichtung 12 und das Elektrogerät 10 die Kopplungsstellung ein, so liegt, wie insbesondere in Figur 7a dargestellt, die Anlagefläche 84 des Dichtelements 80 beziehungsweise 82 an der Anschlagfläche 120 an. Die Dichtrippe 126 gräbt sich dann etwas in das Dichtelement 80 beziehungsweise 82 ein.

Die Längsachsen 128 der Gerätekontaktvorsprünge 108 sind parallel zueinander ausgerichtet. Sie stehen ferner senkrecht von einem Gerätegehäusewandabschnitt 130 ab, der die Gerätekontaktvorsprünge 108 trägt.

Der Gerätegehäusewandabschnitt 130 bildet einen Teil eines Kontaktträgers 132, der in einer Grundstellung die Gerätekontakte 104 schützend umgibt. Der Kontaktträger 132 ist parallel zu den Längsachsen 128 der Gerätekontakte 104 und relativ zu diesen verschiebbar am Gerätegehäuse 100 gelagert.

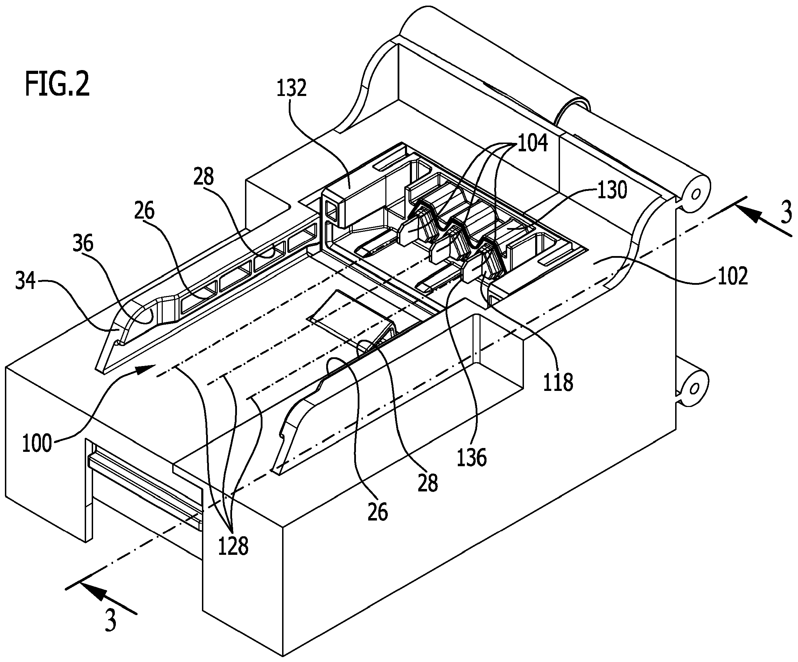

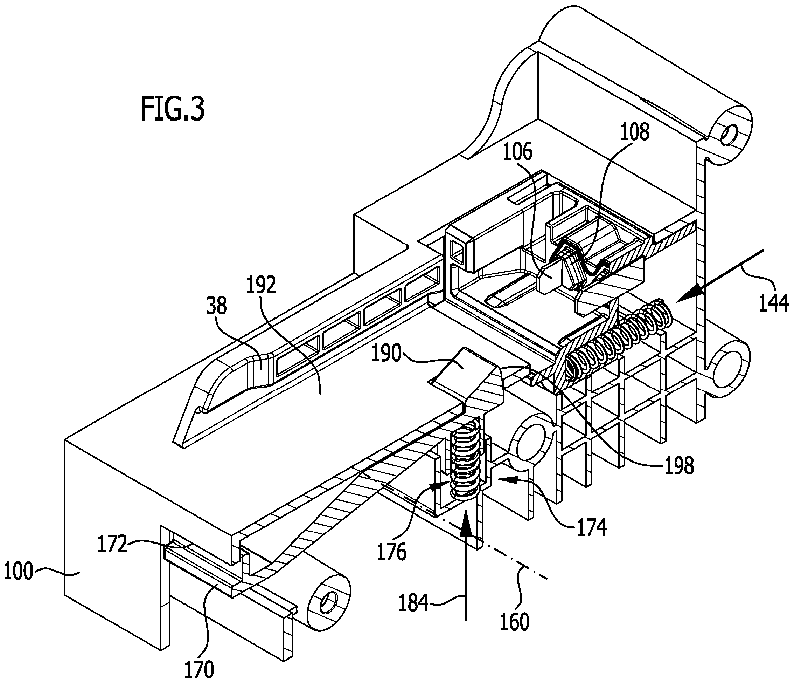

Das Elektrogerät 10 umfasst ferner eine Vorspanneinrichtung 134, die in einer Grundstellung den Kontaktträger 132 in Richtung auf freie Enden 136 der Gerätekontakte 104 hin weisend unter Vorspannung hält und in dieser, in den Figuren nicht dargestellten Grundstellung die Gerätekontakte 104 wie oben beschrieben schützend umgibt beziehungsweise verdeckt. Die Figuren 2 und 3 zeigen den Kontaktträger 132 und die Vorspanneinrichtung 134 schematisch in der ausgelenkten Stellung, also in derjenigen Stellung, die der Kontaktträger 132 in der Kopplungsstellung der Kopplungseinrichtung 20 einnimmt.

Die Vorspanneinrichtung 134 umfasst ein vorspannendes Element 138. Dieses stützt sich einerseits am Kontaktträger 132 und andererseits am Gerätegehäuse 100 ab. Es ist in Form eines Federelements 140 ausgebildet, und zwar als Druckfeder, die als Schraubenfeder ausgebildet ist.

Alternativ könnte das vorspannende Element 138 auch einerseits am Gerätegehäuse 100 und andererseits am Kontaktträger 132 gehalten und in Form einer Zugfeder ausgebildet sein.

Bei dem in den Figuren dargestellten Ausführungsbeispiel ist am Kontaktträger 132 eine sacklochförmige Federelementaufnahme 142 ausgebildet, die parallel zu den Längsachsen 128 in entgegengesetzter Richtung wie die Enden 136 weisend geöffnet ist.

Das vorspannende Element 138 definiert eine durch den Pfeil 144 symbolisierte Wirkrichtung, welche parallel zu den Längsachsen 128 verläuft.

Das Elektrogerät 10 ist insbesondere zum wahlweisen Koppeln mit einer Mehrzahl von insbesondere unterschiedlichen elektrischen Energiespeichervorrichtungen 12 ausgebildet. Diese können eine unterschiedliche Größe aufweisen, sind jedoch insbesondere so ausgebildet, dass sie mit den zweiten Kopplungselementen des Elektrogeräts 10 koppelbar sind.

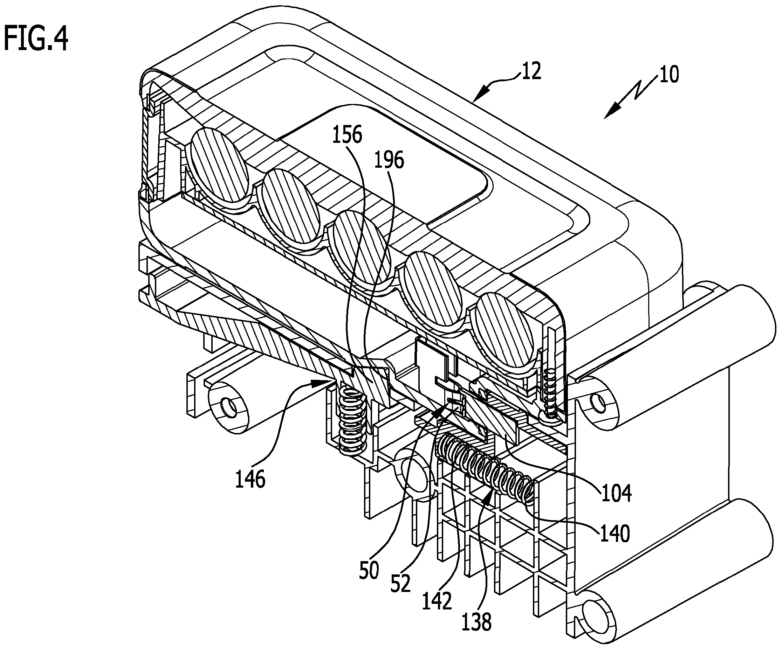

In der Kopplungsstellung sind die elektrischen Kontakte 50 der Energiespeichervorrichtung 12 und die Gerätekontakte 104 des Elektrogeräts 10 elektrisch leitend miteinander verbunden. Wie insbesondere in Figur 4 zu erkennen greifen die Gerätekontakte 104 zwischen die beiden Kontaktzungen 52 der Gerätekontakte 50 ein und stehen mit diesen in elektrischer Wirkverbindung.

Zum Sichern der Energiespeichervorrichtung 12 in der Kopplungsstellung am Elektrogerät 10 dient eine Verriegelungseinrichtung 146. Diese umfasst ein erstes Verriegelungselement 148, das an der Energiespeichervorrichtung 12 angeordnet oder ausgebildet ist, und ein beweglich am Elektrogerät 10 angeordnetes oder ausgebildetes oder gelagertes zweites Verriegelungselement 150.

Das erste Verriegelungselement 148 und das zweite Verriegelungselement 150 stehen in einer Verriegelungsstellung, wie sie beispielhaft in den Figuren 4 und 7 dargestellt ist, kraft- und/oder formschlüssig in Eingriff. Das erste Verriegelungselement 148 ist in Form einer Verriegelungsausnehmung 152 ausgebildet, das zweite Verriegelungselement 150 korrespondierend hierzu in Form eines Verriegelungsvorsprungs 154.

Die Verriegelungsausnehmung 152 ist in Form einer im Querschnitt dreieckigen Vertiefung am Gehäuseoberteil 72 der Energiespeichervorrichtung 12 ausgebildet. Der Verriegelungsvorsprung 154 bildet ein vorstehendes Rastglied 156 an einem freien Ende eines abgewinkelten Verriegelungshebels 158.

Die Kopplungseinrichtung 20 und die Verriegelungseinrichtung 146 sind insbesondere derart ausgebildet, dass die Verriegelungselemente 148 und 150 nur dann in die Verriegelungsstellung bringbar sind, wenn die Kopplungseinrichtung 20 die Kopplungsstellung einnimmt.

Das beweglich angeordnete zweite Verriegelungselement 150 ist von der Verriegelungsstellung in eine Entriegelungsstellung bewegbar, insbesondere verschwenkbar, und zwar um eine Schwenkachse 160, die durch eine Kante 162 des Verriegelungshebels 158 definiert wird. Die Kante 162 begrenzt zwei ebene Flächenabschnitte 164 und 166. In der Verriegelungsstellung liegt der Flächenabschnitt 164 an einer Gegenlagerfläche 168 des Elektrogeräts 10 an. Ein freies, vom Verriegelungsvorsprung 154 weg weisendes Ende des Verriegelungshebels 158 bildet ein Betätigungsglied 170, das am Gerätegehäuse 100 frei zugänglich ist. Es ragt etwas aus einer Öffnung 172 des Gerätegehäuses 100 vor.

Am Elektrogerät 10 ist ferner eine Rückstelleinrichtung 174 zum automatischen Überführen des zweiten Verriegelungselements 150 von einer Entriegelungsstellung, in welcher die Verriegelungselemente 148 und 150 außer Eingriff stehen, in die Verriegelungsstellung.

Die Rückstelleinrichtung 174 umfasst ein Rückstellelement 176, das sich einerseits am Gerätegehäuse 100 und andererseits am Verriegelungshebel 158 und damit indirekt am zweiten Entriegelungselement 150 abstützt.

Das Rückstellelement 176 ist in Form eines Federelements 178 ausgebildet, und zwar bei dem in den Figuren dargestellten Ausführungsbeispiel als Druckfeder.

Am Verriegelungshebel 158 ist in entgegengesetzter Richtung wie der Verriegelungsvorsprung 154 weisend eine sacklochförmige Federelementaufnahme 180 ausgebildet, in die das Federelement 178 etwa zur Hälfte eingesetzt ist. Der Federelementaufnahme 180 gegenüberliegend ist eine Stützfläche 182 des Gerätegehäuses 100 ausgebildet, an der sich das Federelement 178 mit seinem anderen Ende abstützt.

Das Rückstellelement 176 definiert eine durch den Pfeil 184 definierte Wirkrichtung, die quer zur Wirkrichtung 144 des vorspannenden Elements 138 verläuft. Insbesondere verläuft die Wirkrichtung 184 quer, insbesondere senkrecht zu einer von den ersten und zweiten Kopplungselementen 22 und 24 definierten Längsrichtung, welche parallel zu den Längsachsen 128 verläuft. Wird auf des Betätigungsglied 170 eine Kraft in Richtung des Pfeils 186 ausgeübt, wird der Verriegelungshebel 158 um die Kante 162 verschwenkt bis ein quaderförmiges, vom Betätigungsglied 170 in Richtung auf die Gegenlagerfläche 168 vorstehendes Anschlagglied 188 an der Gegenlagerfläche 168 anschlägt. Bei dieser Verschwenkbewegung drückt der Verriegelungshebel 158 das Federelement 178 zusammen und der Verriegelungsvorsprung 154 gibt die Verriegelungsausnehmung 152 frei. Die Energiespeichervorrichtung 12 kann nun parallel zu den Längsachsen 128 vom Elektrogerät 10 abgezogen werden. Dabei wird durch die vorspannende Kraft der Vorspanneinrichtung 134 der Kontaktträger 132 zurück in die Grundstellung gedrückt und das Elektrogerät 10 und die Energiespeichervorrichtung 12 sind elektrisch entkoppelt.

Die Vorspanneinrichtung 134 ist derart ausgebildet, dass sie den Kontaktträger 132, wenn das Elektrogerät 10 und die Energiespeichervorrichtung 12 in der Verriegelungsstellung miteinander gekoppelt sind, so unter Vorspannung hält, dass die Anschlagfläche 120 unter Vorspannung gegen das Dichtelement 80 beziehungsweise 82 gehalten wird. In Figur 7 steht somit das vorspannende Element 138 unter Spannung und drückt die Dichtrippe 126 in das Dichtelement 80 beziehungsweise 82.

Das Dichtelement 80 beziehungsweise 82 ist aus einem Dichtelementmaterial ausgebildet, das weicher ist als das Material, aus dem die Anschlagfläche 120 oder die Dichtrippe 126 ausgebildet sind. Insbesondere kann die Anschlagfläche 120 einstückig oder monolithisch mit der Dichtrippe 126 ausgebildet sein.

Am Verriegelungsvorsprung 154 ist eine Aufgleitfläche 190 ausgebildet, die mit mindestens einer Komponente parallel zu den Längsachsen 128 weist. Die Aufgleitfläche 190 steht etwas in einen Einschubbereich 192 in der Energiespeichervorrichtung 12 vor, der insbesondere durch die zweiten Kopplungselemente 26 seitlich begrenzt wird.

Wird die Energiespeichervorrichtung 12 in den Einschubbereich 192 mit den Kontaktöffnungen 58 voran eingeschoben, gleitet die Aufgleitfläche 190 an einer Kante 194 des Gehäuseoberteils 72 auf und drückt den Verriegelungsvorsprung 154 entgegen der Wirkung des Federelements 178 aus dem Einschubbereich 192 heraus.

Sobald eine von den Gerätekontakten 104 weg weisende Rastkante 196 der Verriegelungsausnehmung eine in Richtung auf die Gerätekontakte 104 hin weisende Rastfläche 198 am Verriegelungsvorsprung 154 hintergreifen kann, drückt das Federelement 178 den Verriegelungsvorsprung automatisch in die Verriegelungsausnehmung 152 hinein. Auf diese Weise wird die Energiespeichervorrichtung beim Koppeln mit dem Elektrogerät 10 automatisch verriegelt, wenn sie mechanisch und/oder elektrisch mit dem Elektrogerät 10 gekoppelt ist.

Für eine optimale Abdichtung wird beim Koppeln der Energiespeichervorrichtung 12 mit dem Elektrogerät 10 der Kontaktträger 132 etwas entgegen der Wirkung der Vorspanneinrichtung 134 ausgelenkt. Diese hält jedoch die Anschlagfläche 120 gegen das Dichtelement 80 beziehungsweise 82 gedrückt. So kann eine optimale Abdichtung zwischen dem Elektrogerät 10 und der Energiespeichervorrichtung 12 erreicht werden, um das Eindringen von Feuchtigkeit insbesondere im Bereich der Kontakte 50 und der Gerätekontakte 104 zu verhindern.

### Bezugszeichenliste

- 10: Elektrogerät
- 12: Energiespeichervorrichtung
- 14: Verbraucher
- 16: Elektromotor
- 18: Gartengerät
- 20: Kopplungseinrichtung
- 22: erstes Kopplungselement
- 24: Kopplungsausnehmung
- 26: zweites Kopplungselement
- 28: Kopplungsvorsprung
- 30: Ende
- 32: Zentrierrippe
- 34: Ende
- 36: Rücksprung
- 38: Anschlagfläche
- 40: Gehäuse
- 42: Aufnahmeraum
- 44: Energiespeicher
- 46: Batterie
- 48: Steuereinrichtung
- 50: Kontakt
- 52: Kontaktzunge
- 54: Ende
- 56: Aufgleitfläche
- 58: Kontaktöffnung
- 60: Längsachse
- 62: Gehäusewandabschnitt
- 64: Wandabschnittsfläche
- 66: kurze Seite
- 68: lange Seite
- 70: Seitenwand
- 72: Gehäuseoberteil
- 74: Befestigungselement
- 76: Befestigungsschraube
- 78: Kontaktebene
- 80: Dichtelement
- 82: Dichtelement
- 84: Anlagefläche
- 86: Rücksprung
- 88: Rücksprunginnenfläche
- 90: Dichtfläche
- 92: Innenwandfläche
- 94: Dicke
- 96: Breite
- 98: Akkupack
- 100: Gerätegehäuse
- 102: Außenseite
- 104: Gerätekontakt
- 106: Kontaktstift
- 108: Gerätekontaktvorsprung
- 110: schmale Außenfläche
- 112: breite Außenfläche
- 114: Symmetrieebene
- 116: Symmetrieebene
- 118: Endfläche
- 120: Anschlagfläche
- 122: Höhe
- 124: Breite
- 126: Dichtrippe
- 128: Längsachse
- 130: Gerätegehäusewandabschnitt
- 132: Kontaktträger
- 134: Vorspanneinrichtung
- 136: Ende
- 138: vorspannendes Element
- 140: Federelement
- 142: Federelementaufnahme
- 144: Pfeil
- 146: Verriegelungseinrichtung
- 148: erstes Verriegelungselement
- 150: zweites Verriegelungselement
- 152: Verriegelungsausnehmung
- 154: Verriegelungsvorsprung
- 156: Rastglied
- 158: Verriegelungshebel
- 160: Schwenkachse
- 162: Kante
- 164: Flächenabschnitt
- 166: Flächenabschnitt
- 168: Gegenlagerfläche
- 170: Betätigungsglied
- 172: Öffnung
- 174: Rückstelleinrichtung
- 176: Rückstellelement
- 178: Federelement
- 180: Federelementaufnahme
- 182: Stützfläche
- 184: Pfeil
- 186: Pfeil
- 188: Anschlagglied
- 190: Aufgleitfläche
- 192: Einschubbereich
- 194: Kante
- 196: Rastkante
- 198: Rastfläche

## Patentansprüche

1. Elektrische Energiespeichervorrichtung (12) für ein Elektrogerät (10), welche elektrische Energiespeichervorrichtung (12) ein Gehäuse (40) umfasst, welches Gehäuse (40) einen Aufnahmeraum (42) definiert, in welchem mindestens ein elektrischer Energiespeicher (44) aufgenommen ist, welche elektrische Energiespeichervorrichtung (12) mindestens zwei von einer Außenseite des Gehäuses zugängliche, elektrisch leitende Kontakte (50) umfasst, die direkt oder indirekt mit dem mindestens einen elektrischen Energiespeicher (12) elektrisch wirkverbunden sind, wobei das Gehäuse (40) mindestens eine Kontaktöffnung (58) aufweist und wobei die mindestens eine Kontaktöffnung (58) von einem in sich geschlossenen Dichtelement (80, 82) umgeben ist, **dadurch gekennzeichnet, dass** mindestens zwei Kontakte (50) durch die mindestens eine Kontaktöffnung zugänglich sind.

2. Elektrische Energiespeichervorrichtung nach Anspruch 1, **dadurch gekennzeichnet, dass** das mindestens eine Dichtelement (80, 82) aus einem Dichtelementmaterial ausgebildet ist, dass das Gehäuse (40, 72) mindestens teilweise, insbesondere vollständig, aus mindestens einem Gehäusematerial ausgebildet ist und dass das Dichtelementmaterial weicher ist als das Gehäusematerial.

3. Elektrische Energiespeichervorrichtung nach einem der voranstehenden Ansprüche, **dadurch gekennzeichnet, dass**
a) eine Dicke (94) des mindestens einen Dichtelements (80, 82) in einem Bereich von etwa 0,2 mm bis etwa 2 mm liegt, insbesondere in einem Bereich von etwa 0,4 mm bis etwa 0,8 mm,
und/oder
b) eine Breite (96) des mindestens einen Dichtelements (80, 82) in einem Bereich von etwa 0,5 mm bis etwa 5 mm liegt, insbesondere in einem Bereich von etwa 1,5 mm bis etwa 2,5 mm.

4. Elektrische Energiespeichervorrichtung nach einem der voranstehenden Ansprüche, **dadurch gekennzeichnet, dass** das mindestens eine Dichtelement (80, 82) aus einem elastischen Material ausgebildet ist oder ein elastisches Material enthält,
wobei insbesondere das elastische Material ein Kunststoff ist, insbesondere ein thermoplastischer Kunststoff,
wobei weiter insbesondere der Kunststoff oder das Kunststoffgemisch ein thermoplastisches Elastomer ist oder mindestens ein thermoplastisches Elastomer enthält.

5. Elektrische Energiespeichervorrichtung nach einem der voranstehenden Ansprüche, **dadurch gekennzeichnet, dass** die mindestens eine Kontaktöffnung (58)
a) einen vieleckigen Querschnitt aufweist, insbesondere einen drei-, fünf-, sechs- oder siebeneckigen Querschnitt,
und/oder
b) derart ausgebildet ist, dass sie genau eine oder genau drei Symmetrieebenen definiert.

6. Elektrische Energiespeichervorrichtung nach einem der voranstehenden Ansprüche, **gekennzeichnet durch** zwei, drei, vier, fünf oder mehr Kontaktöffnungen (58).

7. Elektrische Energiespeichervorrichtung nach Anspruch 6, **dadurch gekennzeichnet, dass**
a) die mindestens zwei, drei, vier, fünf oder mehr Kontaktöffnungen (58) identisch ausgebildet sind
und/oder
b) jede der mindestens zwei, drei, vier, fünf oder mehr Kontaktöffnungen (58) von einem Dichtelement (80, 82) umgeben ist, wobei insbesondere die die zwei, drei, vier, fünf oder mehr Kontaktöffnungen (58) umgebenden Dichtelemente (82) miteinander verbunden, einstückig oder monolithisch ausgebildet sind,
und/oder
c) Längsachsen (60) der zwei, drei, vier, fünf oder mehr Kontaktöffnungen (58) parallel zueinander ausgerichtet sind, insbesondere senkrecht zu einem Gehäusewandabschnitt (62), in dem die Kontaktöffnungen (58) ausgebildet sind.

8. Elektrische Energiespeichervorrichtung nach einem der voranstehenden Ansprüche, **dadurch gekennzeichnet, dass** das mindestens eine Dichtelement (80, 82)
a) flächenbündig mit einem Gehäusewandabschnitt (62), in dem die mindestens eine Kontaktöffnung (58) ausgebildet ist, oder über diesen vorstehend ausgebildet ist
und/oder
b) auf das Gehäuse (40, 72) aufgespritzt ist.

9. Elektrische Energiespeichervorrichtung nach einem der voranstehenden Ansprüche, **dadurch gekennzeichnet, dass** am Gehäuse (40, 72) ein die mindestens eine Kontaktöffnung (58) umgebender Rücksprung (86) ausgebildet ist und dass das mindestens eine Dichtelement (80, 82) den Rücksprung (86) mindestens teilweise, insbesondere vollständig, ausfüllend ausgebildet ist.

10. Elektrische Energiespeichervorrichtung nach einem der voranstehenden Ansprüche, **dadurch gekennzeichnet, dass** das mindestens eine Dichtelement (80, 82) mindestens einen Teil einer die mindestens eine Kontaktöffnung (58) begrenzenden Innenwandfläche (92) bildet.

11. Elektrische Energiespeichervorrichtung nach einem der voranstehenden Ansprüche, **dadurch gekennzeichnet, dass**
a) jedem elektrisch leitenden Kontakt (50) eine Kontaktöffnung (58) zugeordnet ist
und/oder
b) die Anzahl der elektrisch leitenden Kontakte (50) der Anzahl der Kontaktöffnungen (58) entspricht.

12. Elektrische Energiespeichervorrichtung nach einem der voranstehenden Ansprüche, **dadurch gekennzeichnet, dass** das mindestens eine Dichtelement (80, 82) in Form einer Formdichtung oder als O-Ring ausgebildet ist.

13. Elektrische Energiespeichervorrichtung nach einem der voranstehenden Ansprüche, **dadurch gekennzeichnet, dass**
a) der mindestens eine elektrische Energiespeicher (44) in Form einer wiederaufladbaren Batterie (46) ausgebildet ist
und/oder
b) die elektrische Energiespeichervorrichtung eine Mehrzahl von elektrischen Energiespeichern (44) umfasst.

14. Elektrische Energiespeichervorrichtung nach einem der voranstehenden Ansprüche, **dadurch gekennzeichnet, dass** die elektrische Energiespeichervorrichtung (12)
a) ausgebildet ist zum wahlweisen Koppeln mit einer Mehrzahl von insbesondere unterschiedlichen Elektrogeräten (10)
und/oder
b) in Form eines Akkupacks (98) ausgebildet ist.

15. Elektrische Energiespeichervorrichtung nach einem der voranstehenden Ansprüche, **dadurch gekennzeichnet, dass** mindestens einer der mindestens zwei elektrisch leitenden Kontakte (50) eine oder zwei elektrisch leitende, federnd ausgebildete Kontaktzungen (52) umfasst, welche in einer Grundstellung aneinander anliegen oder zwischen sich einen schmalen Spalt definieren,
wobei insbesondere freie, vom Aufnahmeraum (42) weg weisend ausgerichtete Enden (54) der beiden Kontaktzungen (52) voneinander weg weisend gekrümmt sind zur Ausbildung von Aufgleitflächen (56).

## Claims

1. Electrical energy storage device (12) for an electrical appliance (10), which electrical energy storage device (12) comprises a housing (40), which housing (40) defines a receiving space (42) in which at least one electrical energy store (44) is received, which electrical energy storage device (12) comprises at least two electrically conductive contacts (50) which are accessible from an outer side of the housing and which are electrically operatively connected directly or indirectly to the at least one electrical energy store (44), wherein the housing (40) has at least one contact opening (58) and wherein the at least one contact opening (58) is surrounded by a continuous sealing element (80, 82), **characterized in that** at least two contacts (50) are accessible through the at least one contact opening (58).

2. Electrical energy storage device according to claim 1, **characterized in that** the at least one sealing element (80, 82) is formed from a sealing element material, **in that** the housing (40, 72) is formed at least partially, in particular completely, of at least one housing material, and **in that** the sealing element material is softer than the housing material.

3. Electrical energy storage device according to any one of the preceding claims, **characterized in that**
a) a thickness (94) of the at least one sealing element (80, 82) lies in a range of from approximately 0.2 mm to approximately 2 mm, in particular in a range of from approximately 0.4 mm to approximately 0.8 mm
and/or
b) a width (96) of the at least one sealing element (80, 82) lies in a range of from approximately 0.5 mm to approximately 5 mm, in particular in a range of from approximately 1.5 mm to approximately 2.5 mm.

4. Electrical energy storage device according to any one of the preceding claims, **characterized in that** the at least one sealing element (80, 82) is formed from a resilient material or contains a resilient material,
wherein in particular the resilient material is a plastics material, in particular a thermoplastic material,
wherein further in particular the plastics material or the plastics mix is a thermoplastic elastomer or contains at least one thermoplastic elastomer.

5. Electrical energy storage device according to any one of the preceding claims, **characterized in that** the at least one contact opening (58)
a) has a polygonal cross-section, in particular a triangular, pentagonal, hexagonal or heptagonal cross-section,
and/or
b) is formed in such a way that it defines precisely one plane of symmetry or precisely three planes of symmetry.

6. Electrical energy storage device according to any one of the preceding claims, **characterized by** two, three, four, five or more contact openings (58).

7. Electrical energy storage device according to claim 5, **characterized in that**
a) the at least two, three, four, five or more contact openings (58) are identical
and/or
b) each of the at least two, three, four, five or more contact openings (58) is surrounded by a sealing element (80, 82),
wherein in particular the sealing elements (82) surrounding the two, three, four, five or more contact openings (58) are connected to one another, formed in one piece, or formed monolithically,
and/or
c) longitudinal axes (60) of the two, three, four, five or more contact openings (58) are oriented parallel to one another,
in particular perpendicular to a housing wall portion (62) in which the contact openings (58) are formed.

8. Electrical energy storage device according to any one of the preceding claims, **characterized in that** the at least one sealing element (80, 82)
a) is flush-mounted with a housing wall portion (62) in which the at least one contact opening (58) is formed, or protrudes beyond it
and/or
b) the at least one sealing element (80, 82) is sprayed onto the housing (40, 72).

9. Electrical energy storage device according to any one of the preceding claims, **characterized in that** a recess (86) surrounding the at least one contact opening (58) is formed on the housing (40, 72), and **in that** the at least one sealing element (80, 82) fills the recess (86) at least in part, in particular completely.

10. Electrical energy storage device according to any one of the preceding claims, **characterized in that** the at least one sealing element (80, 82) forms at least part of an inner wall face (92) delimiting the at least one contact opening (58).

11. Electrical energy storage device according to any one of the preceding claims, **characterized in that**
a) each electrically conductive contact (50) is associated with a contact opening (58)
and/or
b) the number of electrically conductive contacts (50) corresponds to the number of contact openings (58).

12. Electrical energy storage device according to any one of the preceding claims, **characterized in that** the at least one sealing element (80, 82) is configured in the form of a molded seal or as an O-ring.

13. Electrical energy storage device according to any one of the preceding claims, **characterized in that**
a) the at least one electrical energy store (44) is configured in the form of a rechargeable battery (46)
and/or
b) the electrical energy storage device comprises a plurality of electrical energy stores (44).

14. Electrical energy storage device according to any one of the preceding claims, **characterized in that** the electrical energy storage device (12)
a) is configured to be selectively coupled to a plurality of electrical appliances (10), in particular a plurality of different electrical appliances (10)
and/or
b) in the form of a battery pack (98).

15. Electrical energy storage device according to any one of the preceding claims, **characterized in that** at least one of the at least two electrically conductive contacts (50) comprises one or two electrically conductive, flexible contact tongues (52), which in a starting position abut against one another or define a narrow gap between one another,
wherein in particular free ends (54) of the two contact tongues (52), which ends are oriented pointing away from the receiving space (42), are curved away from one another so as to form lead-in sliding surfaces (56).

## Revendications

1. Dispositif d'accumulation d'énergie électrique (12) pour un appareil électrique (10), lequel dispositif d'accumulation d'énergie électrique (12) comprend un boîtier (40), lequel boîtier (40) définit un espace de réception (42), dans lequel au moins un accumulateur d'énergie électrique (44) est reçu, lequel dispositif d'accumulation d'énergie électrique (12) comprend au moins deux contacts (50) électriquement conducteurs accessibles par une face extérieure du boîtier, qui sont directement ou indirectement électriquement en liaison fonctionnelle avec l'au moins un accumulateur d'énergie électrique (12), dans lequel le boîtier (40) présente au moins une ouverture pour contact (58) et dans lequel l'au moins une ouverture pour contact (58) est entourée par un élément d'étanchéité (80, 82) fermé sur lui-même, **caractérisé en ce qu'**au moins deux contacts (50) sont accessibles par l'au moins une ouverture pour contact.

2. Dispositif d'accumulation d'énergie électrique selon la revendication 1, **caractérisé en ce que** l'au moins un élément d'étanchéité (80, 82) est réalisé à partir d'un matériau d'élément d'étanchéité, que le boîtier (40, 72) est réalisé au moins en partie, en particulier entièrement, à partir d'au moins un matériau de boîtier et que le matériau d'élément d'étanchéité est plus souple que le matériau de boîtier.

3. Dispositif d'accumulation d'énergie électrique selon l'une quelconque des revendications précédentes, **caractérisé en ce que**
a) une épaisseur (94) de l'au moins un élément d'étanchéité (80, 82) se situe dans une plage de sensiblement 0,2 mm à sensiblement 2 mm, en particulier dans une plage de sensiblement 0,4 mm à sensiblement 0,8 mm,
et/ou
b) une largeur (96) de l'au moins un élément d'étanchéité (80, 82) se situe dans une plage de sensiblement 0,5 mm à sensiblement 5 mm, en particulier dans une plage de sensiblement 1,5 mm à sensiblement 2,5 mm.

4. Dispositif d'accumulation d'énergie électrique selon l'une quelconque des revendications précédentes, **caractérisé en ce que** l'au moins un élément d'étanchéité (80, 82) est réalisé à partir d'un matériau élastique ou contient un matériau élastique,
dans lequel en particulier le matériau élastique est une matière plastique, en particulier une matière thermoplastique,
dans lequel plus particulièrement la matière plastique ou le mélange de matières plastiques est un élastomère thermoplastique ou contient au moins un élastomère thermoplastique.

5. Dispositif d'accumulation d'énergie électrique selon l'une quelconque des revendications précédentes, **caractérisé en ce que** l'au moins une ouverture pour contact (58)
a) présente une section transversale polygonale, en particulier une section transversale triangulaire, pentagonale, hexagonale ou heptagonale,
et/ou
b) est réalisée de telle sorte qu'elle définit exactement un ou exactement trois plans de symétrie.

6. Dispositif d'accumulation d'énergie électrique selon l'une quelconque des revendications précédentes, **caractérisé par** deux, trois, quatre, cinq ouvertures pour contact (58) ou plus.

7. Dispositif d'accumulation d'énergie électrique selon la revendication 6, **caractérisé en ce que**
a) les au moins deux, trois, quatre, cinq ouvertures pour contact (58) ou plus sont réalisées de manière identique
et/ou
b) chacune des au moins deux, trois, quatre, cinq ouvertures pour contact (58) ou plus est entourée par un élément d'étanchéité (80, 82),
dans lequel en particulier les éléments d'étanchéité (82) entourant les deux, trois, quatre, cinq ouvertures pour contact (58) ou plus sont reliés les uns aux autres, réalisés d'une seule pièce ou de façon monolithique,
et/ou
c) les axes longitudinaux (60) des deux, trois, quatre, cinq ouvertures pour contact (58) ou plus sont orientés parallèlement les uns aux autres, en particulier perpendiculairement à une partie de paroi de boîtier (62) dans laquelle les ouvertures pour contact (58) sont réalisées.

8. Dispositif d'accumulation d'énergie électrique selon l'une quelconque des revendications précédentes, **caractérisé en ce que** l'au moins un élément d'étanchéité (80, 82)
a) est réalisé à fleur avec une partie de paroi de boîtier (62) dans laquelle l'au moins une ouverture pour contact (58) est réalisée, ou de manière à faire saillie de celle-ci
et/ou
b) est injecté sur le boîtier (40, 72).

9. Dispositif d'accumulation d'énergie électrique selon l'une quelconque des revendications précédentes, **caractérisé en ce qu'**un retrait (86) entourant l'au moins une ouverture pour contact (58) est réalisé sur le boîtier (40, 72) et que l'au moins un élément d'étanchéité (80, 82) est réalisé de manière à remplir le retrait (86) au moins en partie, en particulier entièrement.

10. Dispositif d'accumulation d'énergie électrique selon l'une quelconque des revendications précédentes, **caractérisé en ce que** l'au moins un élément d'étanchéité (80, 82) forme au moins une partie d'une surface de paroi intérieure (92) délimitant l'au moins une ouverture pour contact (58).

11. Dispositif d'accumulation d'énergie électrique selon l'une quelconque des revendications précédentes, **caractérisé en ce que**
a) une ouverture pour contact (58) est associée à chaque contact électriquement conducteur (50)
et/ou
b) le nombre de contacts électriquement conducteurs (50) correspond au nombre d'ouvertures pour contact (58).

12. Dispositif d'accumulation d'énergie électrique selon l'une quelconque des revendications précédentes, **caractérisé en ce que** l'au moins un élément d'étanchéité (80, 82) est réalisé sous forme d'un joint moulé ou en tant que joint torique.

13. Dispositif d'accumulation d'énergie électrique selon l'une quelconque des revendications précédentes, **caractérisé en ce que**
a) l'au moins un accumulateur d'énergie électrique (44) est réalisé sous forme d'une batterie rechargeable (46)
et/ou
b) le dispositif d'accumulation d'énergie électrique comprend une pluralité d'accumulateurs d'énergie électrique (44).

14. Dispositif d'accumulation d'énergie électrique selon l'une quelconque des revendications précédentes, **caractérisé en ce que** le dispositif d'accumulation d'énergie électrique (12)
a) est réalisé pour se coupler sélectivement à une pluralité d'appareils électriques (10) en particulier différents
et/ou
b) est réalisé sous forme d'un bloc-batterie (98).

15. Dispositif d'accumulation d'énergie électrique selon l'une quelconque des revendications précédentes, **caractérisé en ce qu'**au moins un des au moins deux contacts électriquement conducteurs (50) comprend une ou deux languettes de contact (52) électriquement conductrices, réalisées de manière élastique, lesquelles, dans une position de base, s'appliquent l'une sur l'autre ou définissent entre elles une fente étroite,
dans lequel en particulier les extrémités libres (54), orientées dans la direction opposée à l'espace de réception (42), des deux languettes de contact (52) sont courbées à l'opposé l'une de l'autre pour la réalisation de surfaces de glissement (56).
